# EUROPEAN PATENT APPLICATION

(11) **EP 4 450 660 A1**
(43) Date of publication of application: **23.10.2024**
(21) Application number: 21968226.7
(22) Date of filing: 17.12.2021
(51) Int. Cl.: C22C 38/00, B23K 35/30, C22C 19/05, C22C 38/54, C22C 38/60

(54) **NICKEL-CONTAINING STEEL WELD JOINT FOR LOW TEMPERATURE USE**

(71) Applicant: NIPPON STEEL CORPORATION, Chiyoda-ku Tokyo 100-8071 (JP)
(72) Inventor: NAMEGAWA, Tetsuya, Tokyo 100-8071 (JP); HOSHINO, Manabu, Tokyo 100-8071 (JP); OMIYA, Shinichi, Tokyo 100-8071 (JP)
(74) Representative: Vossius & Partner Patentanwälte Rechtsanwälte mbB
(86) International application number: PCT/JP2021/046756
(87) International publication number: WO 2023/112313

(57) **Abstract**

A nickel-containing steel welded joint for low temperature use has: a base metal portion; a welded heat-affected zone; and a weld metal, the base metal portion includes, as a chemical composition, predetermined chemical components, the average circle equivalent diameter of prior austenite of the base metal portion is 3.0 µm or more and 20.0 µm or less, the yield stress of the base metal portion at 20°C is 460 MPa or more and 710 MPa or less, the weld metal includes, as a chemical composition, predetermined chemical components, and the proportion of a body-centered cubic structure in the structure of the weld metal is 10% or less.

## Description

### [Technical Field of the Invention]

The present invention relates to a nickel-containing steel welded joint for low temperature use.

### [Related Art]

9% Ni steel and 7% Ni steel are used for a tank for a liquefied natural gas (LNG) (may be referred to as LNG tank) and the like. An LNG tank is manufactured by welding a steel and a welded joint also requires low temperature toughness. Therefore, a welded joint has been proposed in which a base metal and a weld metal are 9% Ni steels (for example, see Patent Document 1). A steel having an austenitic metallographic structure has excellent low temperature toughness, and a welded joint including a weld metal having a Ni content of 40% or more and a base metal of 9% Ni steel has been proposed (for example, see Patent Document 2).

Incidentally, hydrogen, that is clean energy, is converted into liquid hydrogen to increase the transportation efficiency and is stored in a tank or the like. The boiling point of liquid hydrogen is -253°C at 1 atm, and the temperature of LNG is -162°C. Liquid hydrogen has a lower temperature than LNG, and a tank made of 9% Ni steel may lack toughness at -253°C. As for a base metal of a tank, some of the present inventors have proposed a nickel-containing steel for low temperature use having a higher Ni content than 9% Ni steel (for example, see Patent Documents 3 to 12). Meanwhile, as for a welded joint, a welded joint made of an austenitic stainless steel suitable for a tank that is used for the transportation and storage of liquid hydrogen and the like has been proposed (for example, see Patent Documents 13 and 14).

### [Prior Art Document]

### [Patent Document]

[Patent Document 1] PCT International Publication No. WO2018/051823
[Patent Document 2] PCT International Publication No. WO2017/145854
[Patent Document 3] Japanese Unexamined Patent Application, First Publication No. 2017-197790
[Patent Document 4] Japanese Unexamined Patent Application, First Publication No. 2017-197791
[Patent Document 5] Japanese Unexamined Patent Application, First Publication No. 2017-197792
[Patent Document 6] Japanese Unexamined Patent Application, First Publication No. 2017-197793
[Patent Document 7] Japanese Unexamined Patent Application, First Publication No. 2018-104792
[Patent Document 8] Japanese Unexamined Patent Application, First Publication No. 2018-104793
[Patent Document 9] PCT International Publication No. WO2019/082322
[Patent Document 10] PCT International Publication No. WO2019/082324
[Patent Document 11] PCT International Publication No. WO2019/082325
[Patent Document 12] PCT International Publication No. WO2019/082326
[Patent Document 13] Japanese Unexamined Patent Application, First Publication No. 2001-287077
[Patent Document 14] Japanese Unexamined Patent Application, First Publication No. 2015-171729

### [Disclosure of the Invention]

### [Problems to be Solved by the Invention]

Welded joints including various steels and weld metals that are usable at low temperatures have been proposed. However, the present inventors found, as a result of studies, that it is not easy to ensure the toughness of a welded joint at -253°C, that is the boiling point of liquid hydrogen. The present invention has been contrived in view of the circumstances, and an object of the present invention is to provide a nickel-containing steel welded joint for low temperature use that is usable at low temperatures of around -253°C.

### [Means for Solving the Problem]

The present inventors studied the toughness at low temperatures of around - 253°C in a welded joint in which a base metal is a steel having a Ni content higher than 9% in the related art and a weld metal has an austenitic metallographic structure. As a result, the present inventors found that the toughness at low temperatures of around - 253°C is affected by the strength of the base metal. They also found that the low temperature toughness of the welded joint is improved by controlling the hardness of the base metal portion and the welded heat-affected zone (heat affected zone: HAZ).

The present invention has been made based on the above-described findings, and the gist thereof is as described below.

(1) A nickel-containing steel welded joint for low temperature use according to an aspect of the present invention has: a base metal portion; a welded heat-affected zone; and a weld metal,
   in which the base metal portion includes, as a chemical composition, by mass%,
   C: 0.010% or more and 0.070% or less,
   Si: 0.03% or more and 0.30% or less,
   Mn: 0.10% or more and 0.80% or less,
   Ni: 10.5% or more and 17.4% or less,
   Al: 0.010% or more and 0.060% or less,
   N: 0.0015% or more and 0.0060% or less,
   O: 0.0030% or less,
   P: 0.0080% or less,
   S: 0.0040% or less,
   Cu: 0% or more and 1.00% or less,
   Cr: 0% or more and 1.00% or less,
   Mo: 0% or more and 0.60% or less,
   Nb: 0% or more and 0.050% or less,
   V: 0% or more and 0.080% or less,
   Ti: 0% or more and 0.020% or less,
   B: 0% or more and 0.0020% or less,
   Ca: 0% or more and 0.0040% or less,
   REM: 0% or more and 0.0050% or less, and
   a remainder: Fe and impurities,
   the average circle equivalent diameter of prior austenite of the base metal portion is 3.0 µm or more and 20.0 µm or less,
   the yield stress of the base metal portion at 20°C is 460 MPa or more and 710 MPa or less,
   the weld metal includes, as a chemical composition, by mass%,
   C: 0.01% or more and 0.30% or less,
   Si: 0.03% or more and 0.75% or less,
   Mn: 0.1% or more and 17.0% or less,
   Ni: 8.0% or more and 85.0% or less,
   P: 0.020% or less,
   S: 0.015% or less,
   N: 0.10% or less,
   2.0% or more of a total of one or more of
      Mo: 0% or more and 22.0% or less,
      W: 0% or more and 5.0% or less,
      Cr: 0% or more and 17.0% or less, and
      Nb: 0% or more and 3.0% or less,
   O: 0% or more and 0.1% or less, and
   a remainder: Fe and impurities, and
   the proportion of the structure having a body-centered cubic structure in the structure of the weld metal is 10% or less.
(2) In the nickel-containing steel welded joint for low temperature use according to (1), the weld metal may include, as a chemical composition, by mass%,
   C: 0.01% or more and 0.15% or less,
   Si: 0.03% or more and 0.75% or less,
   Mn: 0.1% or more and 4.0% or less,
   Ni: 40.0% or more and 85.0% or less,
   Mo: 9.0% or more and 22.0% or less,
   W: 0.9% or more and 5.0% or less,
   Cr: 0% or more and 4.0% or less,
   Nb: 0% or more and 3.0% or less,
   P: 0.020% or less,
   S: 0.015% or less,
   N: 0.010% or less,
   O: 0% or more and 0.1% or less, and
   a remainder: Fe and impurities.
(3) In the nickel-containing steel welded joint for low temperature use according to (1), the weld metal may contain, as the chemical composition, by mass%,
   C: 0.01% or more and 0.15% or less,
   Si: 0.03% or more and 0.75% or less,
   Mn: 0.1 % or more and 4.0% or less,
   Ni: 40.0% or more and 85.0% or less,
   Cr: 6.0% or more and 17.0% or less,
   Mo: 0% or more and 9.0% or less,
   W: 0% or more and 5.0% or less,
   Nb: 0.2% or more and 3.0% or less,
   P: 0.020% or less,
   S: 0.015% or less,
   N: 0.010% or less,
   O: 0% or more and 0.1% or less, and
   a remainder: Fe and impurities.
(4) In the nickel-containing steel welded joint for low temperature use according to (1), the weld metal may contain, as the chemical composition, by mass%,
   C: 0.01% or more and 0.30% or less,
   Si: 0.03% or more and 0.75% or less,
   Mn: 7.0% or more and 17.0% or less,
   Ni: 8.0% or more and 18.0% or less,
   Cr: 2.0% or more and 12.0% or less,
   Nb: 0% or more and 3.0% or less,
   Mo: 0% or more and 5.0% or less,
   W: 0% or more and 5.0% or less,
   P: 0.020% or less,
   S: 0.015% or less,
   N: 0.10% or less,
   O: 0% or more and 0.1% or less, and
   a remainder: Fe and impurities.
(5) In the nickel-containing steel welded joint for low temperature use according to any one of (1) to (4),
   a maximum value of Vickers hardness of the welded heat-affected zone may be 1.20 times or more and 3.00 times or less an arithmetic average value of Vickers hardness of the base metal portion and Vickers hardness of the weld metal, and
   an effective grain size of a portion where the Vickers hardness of the welded heat-affected zone is maximized may be 2.0 µm or more and 18.0 µm or less.

### [Effects of the Invention]

According to the present invention, a nickel-containing steel welded joint for low temperature use that is usable at low temperatures of around -253°C is provided.

### [Brief Description of the Drawings]

FIG. 1 is a view showing an example of a nickel-containing steel welded joint for low temperature use according to the present embodiment.
FIG. 2 is a view showing a position where Vickers hardness is measured.
FIG. 3 is a view showing the position of a notch that is introduced to a test piece used for measuring the ultra-low temperature toughness of a welded heat-affected zone.

### [Embodiments of the Invention]

Hereinafter, a nickel-containing steel welded joint for low temperature use according to an embodiment of the present invention will be described. First, new findings obtained as a result of the studies by the present inventors who have completed the present invention will be described in detail.

The toughness of 9% Ni steel that is used for an LNG tank has been evaluated at -165°C or -196°C. The toughness of the nickel-containing steel welded joint for low temperature use (hereinafter, may be abbreviated as "Ni steel joint") according to the present embodiment is evaluated at temperatures of around -253°C lower than -196°C. In the following description, the temperatures of around -253°C will be referred to as "ultra-low temperatures" for convenience in order to distinguish the temperatures from a temperature of -165°C, -196°C, or the like and to give a brief description.

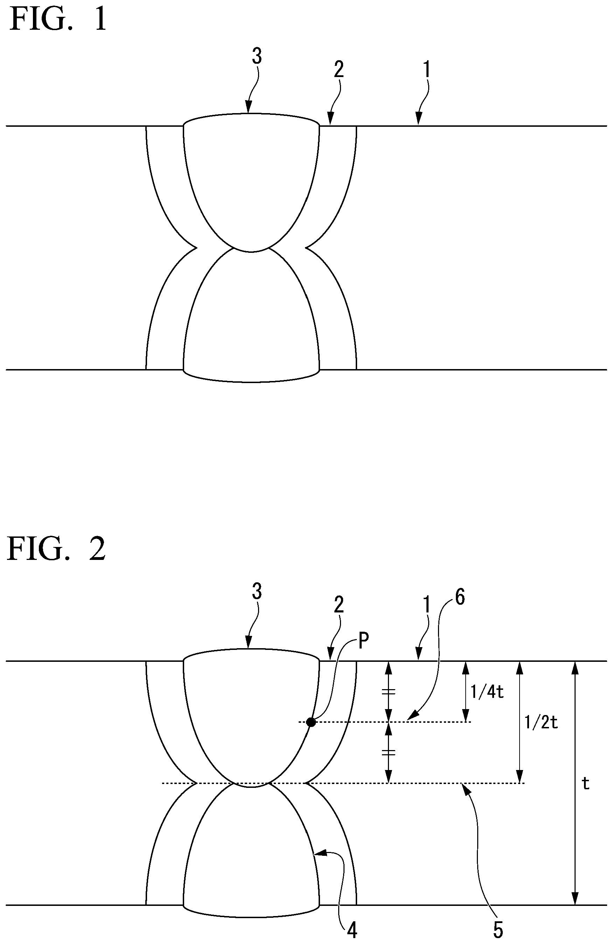

FIG. 1 is a schematic view showing an example of a Ni steel joint according to the present embodiment. FIG. 1 shows a Ni steel joint in a case where the groove shape is an X-shape, and shows a cross section perpendicular to a welding direction. The Ni steel joint according to the present embodiment has a base metal portion 1, a welded heat-affected zone 2, and a weld metal 3. The base metal portion 1, the welded heat-affected zone 2, and the weld metal 3 have different metallographic structures, and each portion can be confirmed by the method according to JIS G 0553: 2019 "Steel-Macroscopic examination by etching". Specifically, a sample is collected from the Ni steel joint by the method according to the above JIS standard, and an observation section is subjected to mechanical polishing and buffing to be finished to a mirror surface, and is etched, so that the base metal portion, the heat-affected zone, and the weld metal can be identified by differences in contrast with the naked eye or a magnifying glass.

The present inventors conducted studies to clarify the influences of the base metal portion, the weld metal, the welded heat-affected zone, and the like on the toughness of the Ni steel joint at ultra-low temperatures (hereinafter, referred to as "ultra-low temperature toughness"). It was found that, among a Ni steel having the same Ni content as the base metal, an austenitic steel containing Mn and Ni, and a high Ni alloy containing 40% or more of Ni, an austenitic steel and a high Ni alloy are optimal as the weld metal. It was found that, in a Ni steel joint in which the weld metal is an austenitic steel including Mn and Ni or a high Ni alloy, the toughness of the weld metal is higher than those of the base metal portion and the HAZ.

At ultra-low temperatures, fracture is likely to occur at the prior austenite grain boundaries of the base metal portion, and the toughness is likely to decrease. The prior austenite grain boundaries are austenite grain boundaries that are present mainly after hot rolling and before the start of water cooling in the manufacturing of the base metal. Fracture is relatively unlikely to occur from prior austenite grain boundaries that are not coarse, among the prior austenite grain boundaries. In a case where the circle equivalent diameter of the prior austenite in the base metal portion is 20.0 µm or less, the ultra-low temperature toughness of the base metal portion and the HAZ is ensured. The strength of the base metal portion affects the ultra-low temperature toughness of the Ni steel joint. In a case where the yield stress of the base metal portion at room temperature (20°C) is 710 MPa or less, the ultra-low temperature toughness of the Ni steel joint is ensured.

In addition, in a case where the strain concentration on the HAZ is alleviated, the ultra-low temperature toughness of the Ni steel joint is improved. In a case where the HAZ has higher hardness than the base metal and the weld metal, the base metal portion and the weld metal are deformed more preferentially than the HAZ, and the strain concentration on the HAZ is alleviated. Preferably, the HAZ has a higher Vickers hardness than the weld metal and the base metal portion in order to improve the ultra-low temperature toughness of the Ni steel joint.

In addition, the effective grain size of a portion where the Vickers hardness of the HAZ is maximized is preferably very small in order to improve the ultra-low temperature toughness of the Ni steel joint.

Hitherto, the new findings obtained through the studies by the present inventors have been described.

### [Base Metal Portion]

Next, the chemical composition of the base metal portion of the Ni steel joint according to the present embodiment will be described. Unless particularly otherwise described, the following description of the chemical composition is a description of the chemical composition of the base metal portion, and "mass%" is expressed as "%".

### (C: 0.010% or More and 0.070% or Less)

C is an element that increases the yield stress of the base metal portion at room temperature and also contributes to the formation of martensite or austenite. The C content is 0.010% or more from the viewpoint of increasing the strength of the base metal portion and therefore ensuring the strength of the entire Ni steel joint. The C content is preferably 0.020% or more, and more preferably 0.040% or more. Meanwhile, in a case where the C content is excessive, the ultra-low temperature toughness of the base metal portion decreases due to the formation of cementite, and the ultra-low temperature toughness of the Ni steel joint decreases. The C content is 0.070% or less from the viewpoint of ensuring the ultra-low temperature toughness of the Ni steel joint. The C content is preferably 0.060% or less, and more preferably 0.050% or less.

### (Si: 0.03% or More and 0.30% or Less)

Si is an element that increases the yield stress of the base metal portion at room temperature. The Si content is 0.03% or more from the viewpoint of increasing the strength of the base metal portion and therefore ensuring the strength of the entire Ni steel joint. The Si content is preferably 0.04% or more, and more preferably 0.05% or more. Meanwhile, Si is an element that decreases toughness. The Si content is 0.30% or less from the viewpoint of suppressing a decrease of the ultra-low temperature toughness of the base metal portion and ensuring the ultra-low temperature toughness of the Ni steel joint. The Si content is preferably 0.20% or less, and more preferably 0.10% or less.

### (Mn: 0.10% or More and 0.80% or Less)

Mn is an element that increases the yield stress of the base metal portion at room temperature. The Mn content is 0.10% or more from the viewpoint of increasing the yield stress of the base metal portion at room temperature and therefore ensuring the strength of the Ni steel joint. The Mn content is preferably 0.25% or more, and more preferably 0.30% or more. Meanwhile, Mn is an element that forms MnS. In a case where the Mn content is excessive, the ultra-low temperature toughness of the base metal portion decreases due to the segregation of Mn to prior austenite grain boundaries, the precipitation of coarse MnS, and the like, and thus the ultra-low temperature toughness of the Ni steel joint decreases. The Mn content is 0.80% or less from the viewpoint of ensuring the ultra-low temperature toughness of the Ni steel joint. The Mn content is preferably 0.70% or less, and more preferably 0.60% or less. The Mn content may be 0.40% or less.

### (Ni: 10.5% or More and 17.4% or Less)

Ni is an important element for improving the ultra-low temperature toughness of steel. The Ni content is 10.5% or more from the viewpoint of ensuring the ultra-low temperature toughness of the Ni steel joint. The Ni content is preferably 11.0% or more, and more preferably 11.5% or more. Ni is an expensive element, and the Ni content is 17.4% or less from the viewpoint of economical efficiency. The Ni content is preferably 15.4% or less, more preferably 14.4% or less, and even more preferably 12.4% or less.

### (Al: 0.010% or More and 0.060% or Less)

Al is a deoxidizing agent and is an element that forms AlN. The Al content is 0.010% or more from the viewpoint of a deoxidation effect, the refinement of the metallographic structure by AlN, and the reduction of solute N that decreases the ultra-low temperature toughness of the base metal portion, and the like. The Al content is preferably 0.015% or more, and more preferably 0.020% or more. Meanwhile, in a case where the Al content is excessive, the ultra-low temperature toughness of the base metal portion decreases due to inclusions, and thus the ultra-low temperature toughness of the Ni steel joint decreases. The Al content is 0.060% or less from the viewpoint of ensuring the ultra-low temperature toughness of the Ni steel joint. The Al content is preferably 0.040% or less, and more preferably 0.035% or less.

### (N: 0.0015% or More and 0.0060% or Less)

N is an element that forms nitrides. The N content is 0.0015% or more from the viewpoint of refinement of crystal grains by nitrides. The N content is preferably 0.0020% or more. Meanwhile, in a case where the N content is excessive, the ultra-low temperature toughness of the base metal portion decreases due to the increase of solute N and the coarsening of nitrides, and thus the ultra-low temperature toughness of the Ni steel joint decreases. The N content is 0.0060% or less from the viewpoint of ensuring the ultra-low temperature toughness of the Ni steel joint. The N content is preferably 0.0050% or less, more preferably 0.0040% or less, and even more preferably 0.0035% or less.

### (O: 0.0030% or Less)

O is an impurity. In a case where the O content is excessive, clusters of Al₂O₃ may increase and the ultra-low temperature toughness of the base metal portion may decrease. The O content is 0.0030% or less from the viewpoint of ensuring the ultra-low temperature toughness of the Ni steel joint. The O content is preferably 0.0025% or less, and more preferably 0.0020% or less, and may be even more preferably 0.0015% or less. The O content is preferably as low as possible, but may be 0.0007% or more from the viewpoint of cost. The O content may be 0.0008% or more, or 0.0010% or more.

### (P: 0.0080% or Less)

P is an impurity. In a case where the P content is excessive, the ultra-low temperature toughness of the base metal portion may decrease due to the intergranular embrittlement at prior austenite grain boundaries. The P content is 0.0080% or less from the viewpoint of ensuring the ultra-low temperature toughness of the Ni steel joint. The P content is preferably 0.0070% or less, more preferably 0.0050% or less, and even more preferably 0.0040% or less. The P content is preferably as low as possible, but may be 0.0003% or more from the viewpoint of cost. The P content may be 0.0005% or more, or 0.0010% or more.

### (S: 0.0040% or Less)

S is an impurity and is an element that forms MnS. In a case where the S content is excessive, the ultra-low temperature toughness of the base metal portion decreases due to the coarsening of MnS. The S content is 0.0040% or less from the viewpoint of suppressing a decrease of the ultra-low temperature toughness of the base metal portion and therefore ensuring the ultra-low temperature toughness of the Ni steel joint. The S content is preferably 0.0030% or less, more preferably 0.0020% or less, and even more preferably 0.0010% or less. The S content is preferably as low as possible, but may be 0.0001% or more from the viewpoint of cost. The S content may be 0.0002% or more, 0.0004% or more, or 0.0006% or more.

In order to improve the strength and toughness of the base metal portion of the Ni steel joint according to the present embodiment, one or two or more of the following optional elements Cu, Cr, Mo, Nb, V, Ti, and B may be contained as necessary.

### (Cu: 0% or More and 1.00% or Less)

Cu is an element that may be mixed in the base metal during the manufacturing of the base metal that is a material of the Ni steel joint, and as a result, may be mixed in the base metal portion of the Ni steel joint. The lower limit of the Cu content is not limited and may be 0%. Cu is an element that contributes to the formation of martensite and austenite, and the Cu content may be 0.02% or more from the viewpoint of an increase of the yield strength of the base metal portion at room temperature. The Cu content is preferably 0.05% or more, and more preferably 0.10% or more. Meanwhile, in a case where Cu is contained, the Cu content is 1.00% or less from the viewpoint of ensuring the ultra-low temperature toughness of the Ni steel joint. The Cu content is preferably 0.50% or less, more preferably 0.40% or less, and even more preferably 0.20% or less.

### (Cr: 0% or More and 1.00% or Less)

Cr is an element that may be mixed in the base metal during the manufacturing of the base metal that is a material of the Ni steel joint, and as a result, may be mixed in the base metal portion of the Ni steel joint. The lower limit of the Cr content is not limited and may be 0%. Cr is an element that increases the hardenability of steel, and the Cr content may be 0.02% or more from the viewpoint of an increase of the yield strength of the base metal portion at room temperature. The Cr content is preferably 0.05% or more, and more preferably 0.10% or more. Meanwhile, in a case where Cr is excessively contained, the ultra-low temperature toughness of the Ni steel joint may decrease due to the formation of coarse carbides in the base metal. In a case where Cr is contained, the Cr content is 1.00% or less from the viewpoint of ensuring the ultra-low temperature toughness of the Ni steel joint. The Cr content is preferably 0.50% or less, more preferably 0.40% or less, and even more preferably 0.20% or less.

### (Mo: 0% or More and 0.60% or Less)

Mo is an element that may be mixed in the base metal during the manufacturing of the base metal that is a material of the Ni steel joint, and as a result, may be mixed in the base metal portion of the Ni steel joint. The lower limit of the Mo content is not limited and may be 0%. Mo is an element that increases the hardenability of steel and suppresses intergranular embrittlement. The Mo content may be 0.02% or more from the viewpoint of improving the yield strength of the base metal portion at room temperature and the ultra-low temperature toughness. The Mo content is preferably 0.05% or more, more preferably 0.10% or more, and even more preferably 0.20% or more. Meanwhile, Mo is an expensive element, and in a case where Mo is contained, the Mo content is 0.60% or less from the viewpoint of economical efficiency. The Mo content is preferably 0.40% or less, more preferably 0.35% or less, and even more preferably 0.30% or less.

### (Nb: 0% or More and 0.050% or Less)

Nb is an element that may be mixed in the base metal during the manufacturing of the base metal that is a material of the Ni steel joint, and as a result, may be mixed in the base metal portion of the Ni steel joint. The lower limit of the Nb content is not limited and may be 0%. Nb is an element that forms carbides, nitrides, and the like, contributes to precipitation hardening, and refines the metallographic structure. The Nb content may be 0.002% or more from the viewpoint of improving the yield strength of the base metal portion at room temperature and the ultra-low temperature toughness. The Nb content is preferably 0.005% or more, and more preferably 0.008% or more. Meanwhile, in a case where the Nb content is excessive, the ultra-low temperature toughness of the base metal portion may decrease due to precipitates. In a case where Nb is contained, the Nb content is 0.050% or less from the viewpoint of suppressing a decrease of the ultra-low temperature toughness of the base metal portion and therefore ensuring the ultra-low temperature toughness of the Ni steel joint. The Nb content is preferably 0.020% or less, and more preferably 0.015% or less.

### (V: 0% or More and 0.080% or Less)

V is an element that may be mixed in the base metal during the manufacturing of the base metal that is a material of the Ni steel joint, and as a result, may be mixed in the base metal portion of the Ni steel joint. The lower limit of the V content is not limited and may be 0%. V is an element that forms carbides, nitrides, and the like, contributes to precipitation hardening, and refines the metallographic structure. The V content may be 0.002% or more from the viewpoint of improving the yield strength of the base metal portion at room temperature and the ultra-low temperature toughness. The V content is preferably 0.005% or more, and more preferably 0.010% or more. Meanwhile, in a case where the V content is excessive, the ultra-low temperature toughness of the base metal portion may decrease due to precipitates. In a case where V is contained, the V content is 0.080% or less from the viewpoint of suppressing a decrease of the ultra-low temperature toughness of the base metal portion and therefore ensuring the ultra-low temperature toughness of the Ni steel joint. The V content is preferably 0.060% or less, and more preferably 0.040% or less.

### (Ti: 0% or More and 0.020% or Less)

Ti is an element that may be mixed in the base metal during the manufacturing of the base metal that is a material of the Ni steel joint, and as a result, may be mixed in the base metal portion of the Ni steel joint. The lower limit of the Ti content is not limited and may be 0%. Ti is an element that forms TiN, contributes to the refinement of the metallographic structure and the reduction of solute N, and improves the toughness of the base metal portion. The Ti content may be 0.001 % or more from the viewpoint of improving the ultra-low temperature toughness of the Ni steel joint. The Ti content is preferably 0.002% or more, and more preferably 0.005% or more. Meanwhile, in a case where the Ti content is excessive, the ultra-low temperature toughness of the base metal portion may decrease due to the coarsening of TiN. The Ti content is 0.020% or less from the viewpoint of suppressing a decrease of the ultra-low temperature toughness of the base metal portion and therefore ensuring the ultra-low temperature toughness of the Ni steel joint. The Ti content is preferably 0.015% or less, and more preferably 0.010% or less.

### (B: 0% or More and 0.0020% or Less)

B is an element that may be mixed in the base metal during the manufacturing of the base metal that is a material of the Ni steel joint, and as a result, may be mixed in the base metal portion of the Ni steel joint. The lower limit of the B content is not limited and may be 0%. B is an element that significantly increases the hardenability of steel. B forms BN and contributes to the reduction of solute N. The B content may be 0.0001% or more from the viewpoint of improving the yield strength of the base metal portion at room temperature and the ultra-low temperature toughness. The B content is preferably 0.0003% or more, and more preferably 0.0005% or more. Meanwhile, in a case where the B content is excessive, the ultra-low temperature toughness of the base metal portion may decrease. The B content is 0.0020% or less from the viewpoint of suppressing a decrease of the ultra-low temperature toughness of the base metal portion and therefore ensuring the ultra-low temperature toughness of the Ni steel joint. The B content is preferably 0.0015% or less, more preferably 0.0012% or less, and even more preferably 0.0010% or less.

The base metal portion of the Ni steel joint according to the present embodiment may contain one or both of optional elements Ca and rare earth metals (REM: rare earth elements) shown below as necessary for the purpose of controlling the form of inclusions.

### (Ca: 0% or More and 0.0040% or Less)

Ca is an element that may be mixed in the base metal during the manufacturing of the base metal that is a material of the Ni steel joint, and as a result, may be mixed in the base metal portion of the Ni steel joint. The lower limit of the Ca content is not limited and may be 0%. Ca is an element that forms oxides and sulfides, suppresses the coarsening of inclusions and the elongation of inclusions due to rolling, and contributes to the improvement in ultra-low temperature toughness of the base metal portion. The Ca content may be 0.0001% or more from the viewpoint of improving the ultra-low temperature toughness of the base metal portion and therefore improving the ultra-low temperature toughness of the Ni steel joint. The Ca content is preferably 0.0005% or more, and more preferably 0.0010% or more. Meanwhile, in a case where the Ca content is excessive, the ultra-low temperature toughness of the base metal decreases due to inclusions. The Ca content is 0.0040% or less from the viewpoint of suppressing a decrease of the ultra-low temperature toughness of the base metal portion and therefore ensuring the ultra-low temperature toughness of the Ni steel joint. The Ca content is preferably 0.0035% or less, and more preferably 0.0030% or less.

### (REM: 0% or More and 0.0050% or Less)

REM (rare earth metal elements) refer to a total of 17 elements consisting of Sc, Y, and lanthanoids, and the REM contain one or two or more elements selected from the group consisting of Sc, Y, and lanthanoids. The REM content is a total of the amounts of the elements contained in the base metal portion among the 17 elements. REM are elements that may be mixed in the base metal during the manufacturing of the base metal that is a material of the Ni steel joint, and as a result, may be mixed in the base metal portion of the Ni steel joint. The lower limit of the REM content is not limited and may be 0%. REM are elements that form oxides and sulfides, and contribute to the refinement of inclusions and the improvement in ultra-low temperature toughness of the base metal portion. The REM content may be 0.0001 % or more from the viewpoint of improving the ultra-low temperature toughness of the base metal portion and therefore improving the ultra-low temperature toughness of the Ni steel joint. The REM content is preferably 0.0005% or more, more preferably 0.0010% or more, and even more preferably 0.0015% or more. The REM content is 0.0050% or less from the viewpoint of cost. The REM content is preferably 0.0040% or less.

The base metal portion of the nickel steel joint according to the present embodiment contains the above-described chemical components with a remainder consisting of Fe and impurities. The total amount of the chemical components is preferably 96.0% or less, more preferably 90.0% or less, and even more preferably 80.0% or less. Here, the impurities are chemical components that are mixed due to various factors in the manufacturing process, including raw materials such as ore and scrap, during the industrial manufacturing of steel, and are accepted to an extent that the base metal portion and the Ni steel joint of the present embodiment are not adversely affected. The chemical components that may be mixed from scrap or the like are, for example, Sb, Sn, As, Co, Zn, and W. The Sb content, the Sn content, and the As content that are accepted to an extent that the base metal portion and the Ni steel joint of the present embodiment are not adversely affected are each 0.003% or less. Similarly, each of the Co content and the Zn content is 0.01 % or less, and the W content is 0.005% or less.

Next, the metallographic structure of the base metal portion of the present embodiment will be described.

### (Average Circle Equivalent Diameter of Prior Austenite: 3.0 µm or More and 20.0 µm or Less)

The average circle equivalent diameter of prior austenite of the base metal portion according to the present embodiment is 20.0 µm or less from the viewpoint of ensuring the ultra-low temperature toughness. The average circle equivalent diameter of the prior austenite is preferably 15.0 µm or less, and more preferably 10.0 µm or less. The prior austenite in the base metal portion of the Ni steel joint is refined by a method increasing the manufacturing cost. Therefore, the average circle equivalent diameter of the prior austenite is 3.0 µm or more from the viewpoint of cost. The average circle equivalent diameter of the prior austenite may be 4.0 µm or more or 5.0 µm or more.

The measurement of the average circle equivalent diameter of the prior austenite is performed by electron backscattering diffraction (EBSD) analysis using a scanning electron microscope (hereinafter, referred to as "SEM") on an observation section that is a middle portion in a sheet thickness direction (thickness middle portion) in an L-cross section (a surface parallel to a rolling direction and the sheet thickness direction). The thickness middle portion mentioned here refers to a range from a position at a depth of 0.4 t from one surface of the base metal to a depth of 0.6 t when the sheet thickness of the base metal portion is represented by t. The observation section of the sample is mirror-polished and corroded with a saturated aqueous solution of picric acid in order to expose prior austenite grain boundaries. The observation by the SEM is performed at a magnification of 1,000 times or 2,000 times, and SEM photographs of 5 or more visual fields are taken. The average circle equivalent diameter of the prior austenite is an arithmetic average value of measured values obtained by image processing using the SEM photographs. The image processing is performed by the following method. That is, regarding grain boundary lines of the prior austenite, the crystal orientations of the martensite and residual austenite are identified in a range of 200 µm × 200 µm in each visual field by EBSD analysis, and the crystal orientations of the prior austenite are obtained in the above range. Lines where the crystal orientation difference of the prior austenite is 15° or more are defined as prior austenite grain boundaries. The area of the prior austenite present in the above range in each visual field is calculated using image analysis software, and from calculated areas S, an average value S_{A} of the prior austenite areas is calculated. Then, the average circle equivalent diameter of the prior austenite is represented by D, and from the expression D=2×√/(π×S_{A}), the average circle equivalent diameter D of the prior austenite is calculated. As the observation section, a piece cut out from the base metal portion of the Ni steel joint may be used, or a piece cut out from the base metal that is a material of the Ni steel joint may be used.

In a case where the prior austenite grain boundaries cannot be distinguished by mirror polishing and corrosion with a saturated aqueous solution of picric acid, a sample held to be heat-treated at a temperature in a range of 450°C or higher and 490°C or lower for 1 hour or longer is mirror-polished and corroded with a saturated aqueous solution of picric acid and used. In a case where the prior austenite grain boundaries do not appear even after the sample adjustment, the circle equivalent diameter of the prior austenite grain is measured by observing a fracture surface of a sample in which grain boundary fracture has occurred by a Charpy impact test. In the Charpy impact test, a Charpy test piece collected from a sample held to be heat-treated at a temperature in a range of 450°C or higher and 490°C or lower for 1 hour or longer is used and the test is performed at -196°C. The Charpy test piece conforms to JIS Z 2242: 2018.

The metallographic structure of the base metal portion of the present embodiment mainly includes tempered martensite and may include austenite. The total volume fraction of the tempered martensite and the austenite in the metallographic structure of the thickness middle portion is 99% or more, and the remainder consists of, for example, coarse inclusions. The volume fraction of the tempered martensite is an area fraction measured by observing the structure of a surface parallel to a rolled surface in the thickness middle portion corroded using nital as a corrosive liquid. From the viewpoint of quantitative histology, the area fraction is basically the same as the volume fraction. The austenite included in the metallographic structure of the base metal portion is so-called residual austenite.

The volume fraction of the residual austenite in the base metal portion is preferably 2.0 vol% or more and 20.0 vol% or less from the viewpoint of improving the ultra-low temperature toughness of the Ni steel joint. The volume fraction of the residual austenite is measured by an X-ray diffraction method. The volume fraction of the residual austenite is obtained from the ratio between the integrated intensities of austenite (face-centered cubic structure) and tempered martensite (body-centered cubic structure) of X-ray peaks. Specifically, the volume fraction of the residual austenite is obtained from the ratio between the integrated intensities of the (111) plane, (200) plane, and (211) plane of ferrite (α phase) having a BCC structure and the integrated intensities of the (111) plane, (200) plane, and (220) plane of austenite (γ phase) having an FCC structure. As a test piece, a piece cut out from the base metal portion of the Ni steel joint may be used, or a piece cut out from the base metal that is a material of the Ni steel joint may be used.

Next, the sheet thickness and the yield stress at 20°C (room temperature) of the base metal portion of the present embodiment will be described.

### (Yield Stress at 20°C: 460 MPa or More and 710 MPa or Less)

Since the base metal portion of the present embodiment is used as a material of a huge structure such as a liquid hydrogen tank, the yield stress of the base metal portion at room temperature is 460 MPa or more. Meanwhile, the yield stress of the base metal portion at room temperature is 710 MPa or less from the viewpoint of ensuring the ultra-low temperature toughness of the Ni steel joint. In the present embodiment, the test temperature is 20°C. The test temperature is controlled by an air conditioner. A tensile test is performed according to JIS Z 2241: 2011. As a test piece, a piece cut out from the base metal portion of the Ni steel joint may be used, or a piece cut out from the base metal that is a material of the Ni steel joint may be used.

### (Sheet Thickness: 4.5 mm or More and 20.0 mm or Less)

Since the Ni steel of the present embodiment is used as a material of a huge structure such as a liquid hydrogen tank, the sheet thickness of the Ni steel is, for example, 4.5 mm or more. The sheet thickness may be 6 mm or more, 8 mm or more, or 10 mm or more. Meanwhile, in a case where the sheet thickness of the Ni steel is increased, the ultra-low temperature toughness may decrease. The sheet thickness of the Ni steel is, for example, 20.0 mm or less. The sheet thickness of the Ni steel may be 16 mm or less or 12 mm or less.

### [Welded Heat-Affected Zone (HAZ)]

Next, the welded heat-affected zone (HAZ) of the Ni steel joint according to the present embodiment will be described.

The HAZ is positioned near the weld metal and is a portion heat-affected by weld heat input. By observing the macrostructure using nital as a corrosive liquid, the base metal portion, the HAZ, and the weld metal can be distinguished. The weld metal of the Ni steel joint according to the present embodiment is a high Ni alloy containing Ni or an austenitic steel that has excellent ultra-low temperature toughness. The weld metal does not act as a starting point of the occurrence of fracture. The HAZ of the Ni steel joint according to the present embodiment has an embrittlement portion having higher Vickers hardness than the base metal. The embrittlement portion is a portion where the Vickers hardness is higher than that of the base metal and the Vickers hardness of the HAZ is maximized.

### (Maximum Value of Vickers Hardness of HAZ: Higher Than Vickers Hardness of Base Metal Portion and Weld Metal)

### (Maximum Value of Vickers Hardness of HAZ: 1.20 Times or More and 3.00 Times or Less Arithmetic Average Value of Vickers Hardness of Base Metal Portion and Vickers Hardness of Weld Metal)

The maximum value of the Vickers hardness of the HAZ is preferably higher than the Vickers hardness of the base metal portion and the weld metal. In a case where the maximum value of the Vickers hardness of the HAZ is higher than the Vickers hardness of the base metal portion and the weld metal, the strain concentration on the HAZ is alleviated due to the deformation of the weld metal and the base metal portion, and the toughness of the Ni steel joint is improved. The maximum value of the Vickers hardness of the HAZ is preferably 1.20 times or more an arithmetic average value of the Vickers hardness of the base metal portion and the Vickers hardness of the weld metal from the viewpoint of improving the ultra-low temperature toughness of the Ni steel joint. The maximum value of the Vickers hardness of the HAZ may be 1.30 times or more or 1.40 times or more the arithmetic average value of the Vickers hardness of the base metal portion and the Vickers hardness of the weld metal. Meanwhile, due to the hardening of the HAZ, fracture is likely to occur in the HAZ, and the toughness of the Ni steel joint may decrease. The maximum value of the Vickers hardness of the HAZ is preferably 3.00 times or less the arithmetic average value of the Vickers hardness of the base metal portion and the Vickers hardness of the weld metal from the viewpoint of improving the ultra-low temperature toughness of the Ni steel joint. The maximum value of the Vickers hardness of the HAZ is more preferably 2.50 times or less, and even more preferably 2.00 times or less the arithmetic average value of the Vickers hardness of the base metal portion and the Vickers hardness of the weld metal.

The Vickers hardness of the base metal portion, the HAZ, and the weld metal of the Ni steel joint according to the present embodiment is measured at a position to be described below. In a case where the root surface of a groove of the weld metal is directly connected to the surface of the base metal portion as in cases of a V-groove (single V groove), a single bevel groove, a J-groove (single J groove), a U-groove (single U groove), and the like, the measurement is performed at a position of t/2 (t/2 portion) from the surface when the sheet thickness is represented by t. In a case where the root surface of a groove of the weld metal includes the t/2 portion as in cases of an X-groove (double V groove), a K-groove (double bevel groove), a double-sided J-groove (double J groove), an H-groove (double U groove), and the like, the measurement is performed at a position of t/4 (t/4 portion) from the surface when the sheet thickness is represented by t. In a case where the root surface of a groove of the weld metal is positioned between the surface and the t/2 portion, the measurement is performed at a position where the distance from the central position of the root surface in the sheet thickness direction to the surface remote therefrom is 1/2. The reason for setting the Vickers hardness measurement position in this way is that the representative hardness when both the weld metal and the base metal portion are included in equal parts at the evaluation position is shown.

The Vickers hardness of the base metal portion, the HAZ, and the weld metal of the Ni steel joint is measured according to JIS Z 2244: 2009 using a sample in which the macrostructure is exposed by a nital method according to JIS G 0553: 2019. As described above, the Vickers hardness measurement position in the base metal portion, the HAZ, and the weld metal is determined at the t/2 portion, the t/4 portion, or the position where the distance from the central position of the root surface in the sheet thickness direction to the surface remote therefrom is 1/2 in accordance with the position of the root surface of the groove in the sheet thickness direction, but the root surface may not be clear in the Ni steel joint after welding. Therefore, in the Ni steel joint according to the present embodiment, the root surface is assumed to be at a position where the width of the weld metal of the macrostructure in a cross section of the Ni steel joint along a direction in which the base metal portion abuts (the length of the weld metal along the abutting direction) is minimized.

Here, the Vickers hardness measurement position will be described in detail with reference to FIG. 2. FIG. 2 is a schematic view showing an example of an X-groove. For example, in FIG. 2, the width of the weld metal 3 is minimized at the t/2 portion. Therefore, a position 5 on the root surface is the t/2 portion where the width of the weld metal 3 is minimized. Since the position 5 on the root surface of the groove is the central portion (t/2 portion) of the base metal portion 1 in the sheet thickness, a Vickers hardness measurement position 6 is the t/4 portion. In this case, there are a t/4 portion that is a position of t/4 from one surface and a t/4 portion that is a position of t/4 from the other surface, and the Vickers hardness may be measured at any t/4 portion. The Vickers hardness of the weld metal 3 is measured from a point P where the Vickers hardness measurement position 6 and a fusion line 4 that is an interface between the HAZ 2 and the weld metal 3 intersect with each other to at least the central portion of the weld metal 3 in the width direction at intervals of 0.5 mm. The Vickers hardness of the weld metal 3 is an arithmetic average value of the measured values. The Vickers hardness of the base metal portion 1 and the HAZ 2 is measured at intervals of 0.5 mm in the direction of the base metal portion 1 from the position (point P) where the measurement of the Vickers hardness of the weld metal 3 is started, until the fluctuation of the measured values is within an error range. In a case where an absolute value of the difference between the measured value at each of five points and the arithmetic average value is at most 5% or less of the arithmetic average value, the fluctuation of the measured values is considered to be within the error range. The Vickers hardness of the base metal portion 1 is a measured value at a portion where the fluctuation of the measured values is within the error range. The measurement of the Vickers hardness is performed with a load of 1 kg.

### (Effective Grain Size of Portion Where Vickers Hardness of HAZ is maximized: 2.0 µm or More and 18.0 µm or Less)

In a case where the grains in the HAZ are coarsened, fracture is likely to occur in the HAZ. The effective grain size of the portion (embrittlement portion) where the Vickers hardness of the HAZ is maximized is preferably 18.0 µm or less from the viewpoint of improving the ultra-low temperature toughness of the Ni steel joint. The portion where the Vickers hardness of the HAZ is maximized refers to a portion where the Vickers hardness of the HAZ measured by the above method is maximized. The effective grain size of the embrittlement portion is more preferably 12.0 µm or less, and even more preferably 8.0 µm or less. Since the effective grain size of the HAZ is not smaller than the effective grain size of the base metal portion, the effective grain size of the embrittlement portion is, for example, 2.0 µm or more. The effective grain size of the embrittlement portion is achieved by refining the effective grain size of the base metal, and a method increasing the manufacturing cost, such as increasing the number of heat treatments, is required in the manufacturing of the base metal that is a material of the Ni steel joint. From the viewpoint of the manufacturing cost, the effective grain size of the embrittlement portion may be 3.0 µm or more, 4.0 µm or more, or 5.0 µm or more. In the present embodiment, the effective grain size is defined as a circle equivalent diameter of a region (effective crystal grains) surrounded by the boundaries of the metallographic structure having an orientation difference of 15° or more.

The effective grain size is measured using an electron backscatter electron beam diffraction (electron back scatter diffraction: hereinafter, referred to as "EBSD") analyzer attached to a scanning electron microscope. The measurement of the effective grain size is performed on an observation section that is a surface (L-surface) that includes the portion where the Vickers hardness of the HAZ is maximized and is perpendicular to the welding direction and perpendicular to the surface of the base metal portion. Using the EBSD analyzer, the observation is performed for 5 or more visual fields at a magnification of 2,000 times. Crystal grains surrounded by the boundaries of the metallographic structure having an orientation difference of 15° or more as grain boundaries are regarded as effective crystal grains, and the circle equivalent diameters (effective grain sizes) of the effective crystal grains are obtained by image processing to obtain an arithmetic average value. The image processing is performed in the same manner as the image processing for calculating the average circle equivalent diameter of the prior austenite of the base metal portion.

### [Weld Metal]

Next, the chemical composition of the weld metal of the Ni steel joint according to the present embodiment will be described. The weld metal is formed by melting the base metal that is a material of the Ni steel joint, and a welding material. Unless particularly otherwise described, the following description of the chemical composition is a description of the chemical composition of the weld metal, and "mass%" is expressed as "%".

### (C: 0.01% or More and 0.30% or Less)

C is an element that increases the strength of the weld metal. The C content is 0.01% or more from the viewpoint of increasing the strength of the weld metal and therefore ensuring the strength of the Ni steel joint. The C content is preferably 0.02% or more, and more preferably 0.04% or more. Meanwhile, in a case where the C content is excessive, the ultra-low temperature toughness of the Ni steel joint decreases due to the formation of cementite. The C content is 0.30% or less from the viewpoint of ensuring the ultra-low temperature toughness of the Ni steel joint. The C content is preferably 0.20% or less, more preferably 0.10% or less, and even more preferably 0.05% or less.

### (Si: 0.03% or More and 0.75% or Less)

Si is a deoxidizing element that suppresses defects of the weld metal such as blowholes. The Si content is 0.03% or more from the viewpoint of ensuring the ultra-low temperature toughness of the Ni steel joint. The Si content is preferably 0.05% or more, and more preferably 0.10% or more. Meanwhile, Si is an element that hardens the weld metal and decreases toughness. The Si content is 0.75% or less from the viewpoint of ensuring the ultra-low temperature toughness of the Ni steel joint. The Si content is preferably 0.60% or less, and more preferably 0.50% or less.

### (Mn: 0.1% or More and 17.0% or Less)

Mn is a deoxidizing element that suppresses defects of the weld metal such as blowholes and is also an element that stabilizes austenite. The Mn content is 0.1% or more from the viewpoint of ensuring the strength and ultra-low temperature toughness of the Ni steel joint. The Mn content is preferably 0.5% or more, and more preferably 1.0% or more. In a case where the Ni content is 18.0% or less, the Mn content may be 7.0% or more or 10.0% or more from the viewpoint of stabilizing the austenite in the weld metal. Meanwhile, Mn is an element having a smaller toughness increasing effect than Ni, and in a case where the Mn content is excessive, the ultra-low temperature toughness of the Ni steel joint decreases. The Mn content is 17.0% or less from the viewpoint of ensuring the ultra-low temperature toughness of the Ni steel joint. The Mn content is preferably 16.0% or less, and more preferably 15.0% or less. In a case where the Ni content is 40.0% or more, the Mn content may be 4.0% or less or 3.5% or less.

### (Ni: 8.0% or More and 85.0% or Less)

Ni is an important element that stabilizes austenite and improves the ultra-low temperature toughness of the weld metal. The Ni content is 8.0% or more from the viewpoint of ensuring the ultra-low temperature toughness of the Ni steel joint. The Ni content is preferably 40.0% or more, more preferably 50.0% or more, and even more preferably 60.0% or more. Ni is an expensive element, and the Ni content is 85.0% or less from the viewpoint of economical efficiency. The Ni content is preferably 80.0% or less. In a case where the Mn content is 7.0% or more, the Ni content may be 18.0% or less or 16.0% or less.

### (Mn+Ni: 15.0% or More and 90.0% or Less)

The total amount of Mn and Ni is 15.0% or more from the viewpoint of ensuring the ultra-low temperature toughness of the Ni steel joint by stabilizing the austenite in the weld metal. The total amount of Mn and Ni is preferably 16.0% or more, more preferably 17.0% or more, and even more preferably 18.0% or more. Meanwhile, the total amount of Mn and Ni is 90.0% or less from the viewpoint of ensuring the chemical components that improve the strength of the Ni steel joint. The total amount of Mn and Ni is preferably 85.0% or less, more preferably 80.0% or less, and even more preferably 75.0% or less.

### (P: 0.020% or Less)

P is an impurity. In a case where the P content is excessive, hot cracking occurs in the weld metal, and thus the ultra-low temperature toughness of the Ni steel joint decreases. The P content is 0.020% or less from the viewpoint of ensuring the ultra-low temperature toughness of the Ni steel joint. The P content is preferably 0.015% or less, more preferably 0.010% or less, and even more preferably 0.005% or less. The P content is preferably as low as possible, but may be 0.001% or more from the viewpoint of cost.

### (S: 0.015% or Less)

S is an impurity. In a case where the S content is excessive, hot cracking occurs in the weld metal, and thus the ultra-low temperature toughness of the Ni steel joint decreases. The S content is 0.015% or less from the viewpoint of ensuring the ultra-low temperature toughness of the Ni steel joint. The S content is preferably 0.010% or less, more preferably 0.005% or less, and even more preferably 0.002% or less. The S content is preferably as low as possible, but may be 0.001% or more from the viewpoint of cost.

### (N: 0.10% or Less)

N is an element that increases the strength of the weld metal and is also an element that stabilizes austenite. The N content can be increased in a case where the Mn content is relatively high, for example, 7.0% or more. However, even in a case where the Mn content is relatively high, blowholes may occur in the weld metal when the N content is excessive, and thus the ultra-low temperature toughness of the Ni steel joint may decrease. The N content is 0.10% or less from the viewpoint of ensuring the ultra-low temperature toughness of the Ni steel joint. The N content is preferably 0.05% or less, and more preferably 0.01% or less. In a case where the Mn content is relatively low, for example, 4.0% or less, blowholes may be more likely to occur in the weld metal due to N than in a case where the Mn content is relatively high. Therefore, the N content is preferably reduced from the viewpoint of preventing the occurrence of blowholes. The N content may be 0.001% or more from the viewpoint of cost.

The weld metal of the Ni steel joint according to the present embodiment contains one or more of Mo, W, Cr, and Nb shown below in order to improve the strength and toughness of the Ni steel joint.

### (Mo: 0% or More and 22.0% or Less)

Mo is an element that increases the corrosion resistance and strength of the weld metal. The lower limit of the Mo content is not limited and may be 0%. The Mo content is preferably 1.0% or more, more preferably 9.0% or more, and even more preferably 12.0% or more. Meanwhile, in a case where the Mo content is excessive, the ultra-low temperature toughness of the Ni steel joint may decrease due to the hardening of the weld metal and the formation of precipitates. The Mo content is 22.0% or less from the viewpoint of ensuring the ultra-low temperature toughness of the Ni steel joint. Mo is an expensive element, and in a case where Cr and Nb to be described later are contained, the Mo content may be 9.0% or less from the viewpoint of economical efficiency. The Mo content may be 7.0% or less or 5.0% or less.

### (W: 0% or More and 5.0% or Less)

W is an element that increases the strength of the weld metal. The lower limit of the W content is not limited and may be 0%. The W content is preferably 0.9% or more, and more preferably 2.0% or more. Meanwhile, in a case where the W content is excessive, the ultra-low temperature toughness of the Ni steel joint may decrease due to the hardening of the weld metal. The W content is 5.0% or less from the viewpoint of ensuring the ultra-low temperature toughness of the Ni steel joint. The W content is preferably 4.0% or less, and more preferably 3.0% or less.

### (Cr: 0% or More and 17.0% or Less)

Cr is an element that increases the corrosion resistance and strength of the weld metal. The lower limit of the Cr content is not limited and may be 0%. The Cr content is preferably 2.0% or more, more preferably 6.0% or more, and even more preferably 8.0% or more. Meanwhile, in a case where the Cr content is excessive, the ultra-low temperature toughness of the Ni steel joint may decrease due to the hardening of the weld metal and the formation of precipitates. The Cr content is 17.0% or less from the viewpoint of ensuring the ultra-low temperature toughness of the Ni steel joint. The Cr content is preferably 15.0% or less, and more preferably 12.0% or less.

### (Nb: 0% or More and 3.0% or Less)

Nb is an element that increases the strength of the weld metal. The lower limit of the Nb content is not limited and may be 0%. The Nb content is preferably 0.2% or more, and more preferably 1.0% or more. Meanwhile, in a case where the Nb content is excessive, the ultra-low temperature toughness of the Ni steel joint may decrease due to the hardening of the weld metal and the formation of precipitates. The Nb content is 3.0% or less from the viewpoint of ensuring the ultra-low temperature toughness of the Ni steel joint. The Nb content is preferably 2.5% or less, and more preferably 2.0% or less.

### (Total Amount of one or more of Mo, W, Cr, and Nb: 2.0% or More)

The total amount of one or more of Mo, W, Cr, and Nb is 2.0% or more from a viewpoint of ensuring the strength of the Ni steel joint by increasing the strength of the weld metal. The total amount of one or more of Mo, W, Cr, and Nb is preferably 6.0% or more, more preferably 7.0% or more, and even more preferably 10.0% or more. In a case where the weld metal contains two elements Cr and Nb, the total amount of Cr and Nb is preferably 6.2% or more. In a case where the weld metal contains two elements Mo and W, the total amount of Mo and W is preferably 9.9% or more. The total amount of one or more of Mo, W, Cr, and Nb is preferably 50.0% or less, more preferably 30.0% or less, and even more preferably 25.0% or less.

The weld metal of the Ni steel joint according to the present embodiment contains the above-described chemical components with a remainder consisting of Fe and impurities. The chemical components that may be mixed in the weld metal as impurities are, for example, Sb, Sn, As, Co, and Zn. The Sb content, the Sn content, and the As content that are accepted to an extent that the Ni steel joint according to the present embodiment is not adversely affected are each 0.003% or less. Similarly, each of the Co content and the Zn content is 0.01 % or less.

The weld metal may include, for example, as a chemical composition, C: 0.01% or more and 0.15% or less,
Si: 0.03% or more and 0.75% or less,
Mn: 0.1% or more and 4.0% or less,
Ni: 40.0% or more and 85.0% or less,
Mo: 9.0% or more and 22.0% or less,
W: 0.9% or more and 5.0% or less,
Cr: 0% or more and 4.0% or less,
Nb: 0% or more and 3.0% or less,
P: 0.020% or less,
S: 0.015% or less,
N: 0.010% or less,
O: 0% or more and 0.1% or less, and
a remainder: Fe and impurities.

In a case where the chemical composition of the weld metal is within the above range, more excellent ultra-low temperature toughness can be obtained.

In addition, the weld metal may include, for example, as a chemical composition, C: 0.01 % or more and 0.15% or less,
Si: 0.03% or more and 0.75% or less,
Mn: 0.1% or more and 4.0% or less,
Ni: 40.0% or more and 85.0% or less,
Cr: 6.0% or more and 17.0% or less,
Mo: 0% or more and 9.0% or less,
W: 0% or more and 5.0% or less,
Nb: 0.2% or more and 3.0% or less,
P: 0.020% or less,
S: 0.015% or less,
N: 0.010% or less,
O: 0% or more and 0.1 % or less, and
a remainder: Fe and impurities.

In a case where the chemical composition of the weld metal is within the above range, it is possible to obtain excellent ultra-low temperature toughness while suppressing an increase in cost.

In addition, the weld metal may include, for example, as a chemical composition, C: 0.01% or more and 0.30% or less,
Si: 0.03% or more and 0.75% or less,
Mn: 7.0% or more and 17.0% or less,
Ni: 8.0% or more and 18.0% or less,
Cr: 2.0% or more and 12.0% or less,
Nb: 0% or more and 3.0% or less,
W: 0% or more and 5.0% or less,
Mo: 0% or more and 5.0% or less,
P: 0.020% or less,
S: 0.015% or less,
N: 0.10% or less,
O: 0% or more and 0.1% or less, and
a remainder: Fe and impurities.

In a case where the chemical composition of the weld metal is within the above range, it is possible to ensure the ultra-low temperature toughness while further suppressing an increase in cost.

### (Proportion of Structure Having Body-Centered Cubic Structure in Structure of Weld Metal: 10% or Less)

The proportion of the structure having a body-centered cubic structure (BCC) in the structure of the weld metal of the Ni steel joint according to the present embodiment is 10% or less. BCC is inferior in toughness to a face-centered cubic structure (FCC). Accordingly, in a case where the proportion of the structure having a body-centered cubic structure is high, cracking is likely to occur from the BCC as a starting point. Therefore, the proportion of the structure having a body-centered cubic structure in the structure of the weld metal is 10% or less. The proportion of the structure having a body-centered cubic structure in the structure of the weld metal is preferably 5% or less, more preferably 2% or less, and even more preferably 0%.

The metallographic structure of the weld metal is mainly derived from the chemical composition of the weld metal. The range of the chemical composition of the weld metal according to the present embodiment described so far includes both a region where the body-centered cubic structure (BCC) is 10% or less and a region where the body-centered cubic structure (BCC) is more than 10% in the metallographic structure. As described above, in the region where the body-centered cubic structure (BCC) is more than 10% in the metallographic structure of the weld metal, cracking is likely to occur in the weld metal, so that the effects of the present invention cannot be obtained.

In the chemical composition, it is difficult to clearly separate and define the region where the body-centered cubic structure (BCC) is 10% or less in the metallographic structure from the region where the body-centered cubic structure (BCC) is more than 10%. In the present embodiment, the chemical composition is substantially limited by specifying the metallographic structure fraction of the weld metal.

The proportion of the body-centered cubic structure in the structure of the weld metal is measured by the following method. That is, by using a ferrite structure amount measuring instrument (FERITSCOPE (registered trademark) FMP30) manufactured by FISCHER INSTRUMENTS K.K., the proportion of the BCC is measured with the use of a probe (FGAB 1.3-Fe) manufactured by FISCHER INSTRUMENTS K.K. as a probe of the measuring instrument. It is an instrument that measures the ferromagnetic body content of the metallographic structure by using magnetic induction, and quantifies and displays the proportion of the BCC that is a ferromagnetic body in the surface layer (a region up to about 1.5 mm below the surface). The structure of the weld metal of the Ni steel joint according to the present embodiment includes two phases of FCC and BCC or only the FCC.

### [Method of Manufacturing Ni Steel Joint]

Next, an example of a method of manufacturing the Ni steel joint according to the present embodiment will be described. The Ni steel joint according to the present embodiment is capable of obtaining the effects regardless of the manufacturing method as long as it has the above-described configuration.

First, an example of a method of manufacturing the base metal to be a material of the Ni steel joint according to the present embodiment will be described. In the following description, the base metal to be a material of the Ni steel joint may be simply referred to as a base metal.

For the manufacturing of the base metal of the present embodiment, for example, a steel piece manufactured by melting a steel and subjecting it to continuous casting is used. The base metal is manufactured by, for example, performing hot rolling and a heat treatment on the steel piece. Accelerated cooling such as water cooling is preferably performed after hot rolling. The heat treatment includes, for example, a first heat treatment that is performed at a higher temperature and a second heat treatment that is performed at a lower temperature. One of the first heat treatment and the second heat treatment may be performed, or both the heat treatments may be performed. In the first heat treatment or the second heat treatment, accelerated cooling such as water cooling is preferably performed after holding at a heating temperature.

In the following description, preferable manufacturing conditions in each step of the base metal manufacturing method of the present embodiment will be described.

### (Heating Temperature of Steel Piece Used for Hot Rolling: 950°C or Higher and 1160°C or Lower)

### (Holding Time: 20 Minutes or Longer and 180 Minutes or Shorter)

The heating temperature of the steel piece in the hot rolling is preferably 950°C or higher from the viewpoint of reducing the load on a rolling mill and the like. Meanwhile, the heating temperature of the steel piece in the hot rolling is preferably 1160°C or lower from the viewpoint of the refinement of the prior austenite in the base metal. The holding time at the heating temperature is preferably 20 minutes or longer from the viewpoint of the uniformization of the temperature of the steel piece. The holding time at the heating temperature is preferably 180 minutes or shorter from the viewpoint of cost and the like.

### (Cumulative Rolling Reduction at 950°C or Lower in Hot Rolling: 90% or More and 95% or Less)

The cumulative rolling reduction at 950°C or lower in the hot rolling is preferably 90% or more from the viewpoint of the refinement of the prior austenite in the base metal. Meanwhile, the cumulative rolling reduction at 950°C or lower in the hot rolling is preferably 95% or less from the viewpoint of cost and the like. The cumulative rolling reduction at 950°C or lower in the hot rolling is calculated from the sheet thickness at 950°C and the sheet thickness at the end of hot rolling.

### (Hot Rolling End Temperature: 680°C or Higher and 850°C or Lower)

The hot rolling end temperature is preferably 680°C or higher and 850°C or lower from the viewpoint of ensuring the yield stress of the base metal at room temperature and the ultra-low temperature toughness of the base metal. The hot rolling end temperature is preferably 680°C or higher from the viewpoint of preventing the accelerated cooling start temperature from being lowered. Meanwhile, the hot rolling end temperature is preferably 850°C or lower from the viewpoint of suppressing the recovery of the dislocation introduced by rolling.

### (Accelerated Cooling Start Temperature After Hot Rolling: 580°C or Higher)

Accelerated cooling after hot rolling is performed by, for example, water cooling. The accelerated cooling start temperature is preferably 580°C or higher from the viewpoint of ensuring the yield stress at room temperature. The accelerated cooling start temperature is not higher than the hot rolling end temperature. The cooling rate for accelerated cooling is preferably 10 °C/sec or faster. The cooling rate for accelerated cooling is the average value from the start to the end of the accelerated cooling. The upper limit of the cooling rate for accelerated cooling is not particularly limited and may be 50 °C/sec or slower. The accelerated cooling end temperature is preferably 200°C or lower from the viewpoint of promoting the martensitic transformation of the base metal.

### (Holding Temperature in First Heat Treatment: 610°C or Higher and 650°C or Lower)

### (Holding Time: 20 Minutes or Longer and 180 Minutes or Shorter)

The first heat treatment is performed after accelerated cooling after hot rolling. The first heat treatment is effective for ensuring residual austenite that improves the ultra-low temperature toughness of the base metal.

The temperature rising rate to the holding temperature can be set to, for example, 1 °C/min or faster and 50 °C/min or slower. The temperature rising rate to the holding temperature is preferably 5 °C/min or faster, and more preferably 10 °C/min or faster from the viewpoint of the temperature rising time. In addition, the temperature rising rate to the holding temperature is preferably 40 °C/min or slower, and more preferably 30 °C/min or slower from the viewpoint of economical efficiency.

The holding temperature in the first heat treatment is preferably 610°C or higher and 650°C or lower. The holding temperature in the first heat treatment is preferably 610°C or higher from the viewpoint of promoting the austenitic transformation. Meanwhile, the holding temperature in the first heat treatment is preferably 650°C or lower from the viewpoint of stabilizing the austenite.

The holding time in the first heat treatment is preferably 20 minutes or longer, and more preferably 60 minutes or longer from the viewpoint of ensuring the austenite. Meanwhile, the holding time in the first heat treatment is preferably 180 minutes or shorter, and more preferably 120 minutes or shorter from the viewpoint of suppressing the precipitation of carbides.

The cooling rate in the accelerated cooling after holding in the first heat treatment is preferably 8 °C/sec or faster from the viewpoint of preventing tempering embrittlement. The cooling rate for accelerated cooling is the average value from the start to the end of the accelerated cooling. The upper limit of the cooling rate for accelerated cooling is not particularly limited, and the cooling rate may be, for example, 50 °C/sec or slower. The accelerated cooling end temperature is preferably 200°C or lower.

### (Holding Temperature in Second Heat Treatment: 530°C or Higher and 570°C or Lower)

### (Holding Time: 20 Minutes or Longer and 180 Minutes or Shorter)

The second heat treatment is performed after accelerated cooling after hot rolling, or after the first heat treatment, and is preferably performed after the first heat treatment. The second heat treatment is effective for ensuring residual austenite that improves the ultra-low temperature toughness of the base metal.

The temperature rising rate to the holding temperature can be set to, for example, 1 °C/min or faster and 50 °C/min or slower. The temperature rising rate to the holding temperature is preferably 5 °C/min or faster, and more preferably 10 °C/min or faster from the viewpoint of the temperature rising time. In addition, the temperature rising rate to the holding temperature is preferably 40 °C/min or slower, and more preferably 30 °C/min or slower from the viewpoint of economical efficiency.

The holding temperature in the second heat treatment is preferably 530°C or higher and 570°C or lower from the viewpoint of improving the ultra-low temperature toughness of the base metal. The holding temperature in the second heat treatment is preferably 530°C or higher from the viewpoint of the stabilization by concentration of C in the austenite. The holding temperature in the second heat treatment is preferably 570°C or lower from the viewpoint of suppressing the formation of hard martensite.

The holding time in the second heat treatment is preferably 20 minutes or longer, and more preferably 60 minutes or longer from the viewpoint of stabilizing the austenite. Meanwhile, the holding time in the second heat treatment is preferably 180 minutes or shorter, and more preferably 120 minutes or shorter from the viewpoint of suppressing the precipitation of carbides.

The cooling rate for accelerated cooling after holding in the second heat treatment is preferably 5 °C/sec or faster from the viewpoint of preventing tempering embrittlement. The cooling rate for accelerated cooling is the average value from the start to the end of the accelerated cooling. The upper limit of the cooling rate for accelerated cooling is not particularly limited, and the cooling rate may be, for example, 50 °C/sec or slower. The accelerated cooling end temperature is preferably 200°C or lower.

Hitherto, an example of the method of manufacturing the base metal has been described.

The welding material that is used for the manufacturing of the Ni steel joint is selected in consideration of the dilution of the chemical components by the base metal. The welding material includes, for example, as a chemical composition, by mass%, C: 0.01 % or more and 0.33% or less, Si: 0.03% or more and 0.83% or less, Mn: 0.1% or more and 18.9% or less, Ni: 8.9% or more and 94.4% or less, S: 0.015% or less, Mo: 0% or more and 24.4% or less, W: 0% or more and 5.6% or less, Cr: 0% or more and 18.9% or less, Nb: 0% or more and 3.3% or less, a total amount of Mo, W, Cr, and Nb of 2.2% or more, N: 0.1% or less, and a remainder consisting of Fe and impurities. In a case where Cr and Nb are not contained in the chemical composition of the welding material, Mo: 10.0% or more and 24.4% or less and W: 1.0% or more and 5.6% or less are preferable. In a case where Mo and W are not contained in the chemical composition of the welding material, Cr: 6.7% or more and 18.9% or less and Nb: 0.2% or more and 3.3% or less are preferable.

As the welding method, for example, any of coating arc welding, submerged arc welding, tungsten inert gas welding (TIG welding), metal active gas welding (MAG welding), and electrogas arc welding is performed. The shape of the groove is any of a V-groove (single V groove), a single bevel groove, a J-groove (single J groove), a U-groove (single U groove), an X-groove (double V groove), a K-groove (double bevel groove), a double-sided J-groove (double J groove), and an H-groove (double U groove). The groove shape is preferably an X-groove, and the groove angle is, for example, 60°. The weld heat input is preferably 10 kJ/cm or more, and more preferably 20 kJ/cm or more from the viewpoint of work efficiency. Meanwhile, the weld heat input is 30 kJ/cm or less from the viewpoint of improving the ultra-low temperature toughness of the Ni steel joint.

### [Examples]

Examples of the present invention will be shown below. The examples to be shown below are merely examples of the present invention, and the present invention is not limited thereto.

Steel pieces having a thickness of 150 mm to 400 mm were manufactured by melting a steel using a converter and then subjecting it to continuous casting. The steel pieces were heated to be hot-rolled and heat-treated, and thus steel sheets were manufactured. The heating temperature for hot rolling was in a range of 950°C or higher and 1,160°C or lower, and the holding time was in a range of 20 minutes or longer and 180 minutes or shorter. The cumulative rolling reduction at 950°C or lower was in a range of 90% or more and 95% or less, and the hot rolling end temperature was in a range of 680°C or higher and 850°C or lower. The accelerated cooling start temperature after hot rolling was 580°C or higher and not higher than the hot rolling end temperature. The end temperature of accelerated cooling after hot rolling was 200°C or lower. The cooling rate (the average value from the start to the end of the accelerated cooling) for accelerated cooling after hot rolling was 10 °C/sec or faster.

After that, a first heat treatment was performed, and a second heat treatment was performed after the first heat treatment.

The temperature rising rate in the first heat treatment was in a range of 1 °C/min or faster and 50°C/min or slower, the holding temperature in the first heat treatment was in a range of 610°C or higher and 650°C or lower, and the holding time at the above holding temperature in the first heat treatment was in a rage of 20 minutes or longer and 180 minutes or shorter. The cooling rate (the average value from the start to the end) for accelerated cooling after holding at the above holding temperature in the first heat treatment was 8 °C/sec or faster. The end temperature of accelerated cooling after holding at the above temperature in the first heat treatment was 200°C or lower.

The temperature rising rate in the second heat treatment was in a range of 1 °C/min or faster and 50 °C/min or slower, and the holding temperature in the second heat treatment was in a range of 530°C or higher and 570°C or lower. The holding time at the above holding temperature in the second heat treatment was in a range of 20 minutes or longer and 180 minutes or shorter. The cooling rate for accelerated cooling after holding in the second heat treatment was 5 °C/sec or faster. The end temperature of accelerated cooling after holding in the second heat treatment was 200°C or lower.

A sample was collected from each of the steel sheets manufactured in the above-described process, and the amount of each chemical component was measured. The chemical components of each steel sheet are shown in Tables 1A and 1B. It is needless to say that the chemical components of each steel sheet and the chemical components of a base metal portion after welding of each steel sheet are the same. Therefore, the chemical components shown in Tables 1A and 1B indicate the chemical components of a base metal portion of a Ni steel joint. Blanks in Tables 1A and 1B mean that the corresponding element is not intentionally added. In addition, underlined numerical values in Table 1B mean that they are outside the range of the present invention.

**[Table 1A]**

| No | Chemical Composition ot Base Metal (mass%) Remainder- Fe and Impurities | | | | | | | | | | | | | | | | | |
|---|---|---|---|---|---|---|---|---|---|---|---|---|---|---|---|---|---|---|
| | C | Si | Mn | Ni | Al | N | O | P | S | Cu | Cr | Mo | Nb | V | Ti | B | Ca | RLM |
| 1 | 0.025 | 0.12 | 0.33 | 12.6 | 0.040 | 0.0035 | 0.0012 | 0.003 | 0.0015 | | | | | | | | | |
| 2 | 0.070 | 0.15 | 0.50 | 14.8 | 0 021 | 0.0046 | 0 0018 | 0004 | 0 0010 | | 0.25 | 0.15 | | | | | | |
| 3 | 0.047 | 0.20 | 0.12 | 11.2 | 0.020 | 0.0030 | 0.0010 | 0.003 | 0.0012 | | | | | | | | | |
| 4 | 0.044 | 0.19 | 0 10 | 169 | 0.022 | 0.0028 | 0.0013 | 0 003 | 0 0010 | | | | | | | | | |
| 5 | 0.045 | 0.30 | 030 | 13.3 | 0 019 | 0 0025 | 0 0008 | 0003 | 0.0014 | | | 0.35 | 0020 | 0 041 | | | | |
| 6 | 0.044 | 0.20 | 0.10 | 13.3 | 0.018 | 0.0030 | 0.0010 | 0.003 | 0.0010 | | | 0.60 | | | | | | |
| 7 | 0.044 | 0.20 | 0.10 | 13.3 | 0.018 | 0.0030 | 0.0010 | 0 003 | 0 0010 | | | 0.60 | | | | | | |
| 8 | 0.044 | 0.20 | 0 10 | 13 3 | 0 018 | 0.0030 | 0 0010 | 0003 | 0 0010 | | | 0.60 | | | | | | |
| 9 | 0.044 | 0.20 | 0.10 | 13.3 | 0.018 | 0.0030 | 0.0010 | 0.003 | 0.0010 | | | 0.60 | | | | | | |
| 10 | 0.045 | 0.05 | 0.80 | 127 | 0.046 | 0.0032 | 0.0014 | 0.005 | 0.0009 | | | 0.03 | | 0.032 | 0.011 | 0.0012 | | |
| 11 | 0.050 | 0.05 | 052 | 130 | 0 048 | 0 0031 | 00009 | 0.003 | 0.0040 | | 1.00 | 0.18 | 0.009 | | 0007 | | | 00021 |
| 12 | 0.052 | 0.05 | 0.51 | 14.1 | 0.060 | 0.0046 | 0.0007 | 0.003 | 0.0035 | 0.10 | | 0.50 | | | | 0.0014 | 0.0018 | |
| 13 | 0.065 | 0.10 | 041 | 15 1 | 0.060 | 0.0048 | 0.0017 | 0 003 | 0.0005 | | 0.26 | 0.33 | | | | | 0.0014 | |
| 14 | 0.045 | 0.07 | 0 27 | 15 1 | 0010 | 0.0030 | 00015 | 0008 | 0.0008 | 0.15 | 007 | 0.25 | 0019 | 0068 | 0019 | | | 0.0037 |
| 15 | 0.056 | 0.04 | 0.35 | 13.5 | 0.030 | 0.0016 | 0.0009 | 0.003 | 0.0017 | | 0.69 | 0.07 | 0.015 | 0.063 | | 0.0005 | | 0.0049 |
| 16 | 0.026 | 0.09 | 0 54 | 141 | 0.040 | 0.0037 | 0.0023 | 0.005 | 00007 | 0.32 | | 0.37 | | | 0017 | 0.0014 | | |
| 17 | 0.067 | 0.07 | 0.40 | 14.4 | 0.036 | 0.0051 | 0.0016 | 0.008 | 0.0011 | | | 0.15 | | 0.080 | | | 0.0024 | 0.0015 |
| 18 | 0.060 | 0.07 | 040 | 125 | 0.010 | 0.0045 | 0.0021 | 0.003 | 0.0013 | 0.97 | | 0.08 | 0.013 | | | 0.0020 | | |
| 19 | 0.044 | 0.26 | 070 | 133 | 0.055 | 0.0020 | 0.0023 | 0006 | 00015 | | | 0.15 | | | 0020 | | 0.0040 | |
| 20 | 0.035 | 0.04 | 0.55 | 12.7 | 0.055 | 0.0015 | 0.0008 | 0.007 | 0.0010 | | 0.41 | 0.10 | | | | 0.0006 | | 0.0050 |

| | | | | | | | | | | | | | | | | | | |
|---|---|---|---|---|---|---|---|---|---|---|---|---|---|---|---|---|---|---|
| The blanks mean that the corresponding element is not intentionally added The underlines mean that the corresponding numerical value is outside the range ot the present invention | | | | | | | | | | | | | | | | | | |

**[Table 1B]**

| No. | Chemical Composition of Base Metal (mass%) Remainder: Fe and Impurities | | | | | | | | | | | | | | | | | |
|---|---|---|---|---|---|---|---|---|---|---|---|---|---|---|---|---|---|---|
| | C | Si | Mn | Ni | Al | N | O | P | S | Cu | Cr | Mo | Nb | V | Ti | B | Ca | REM |
| 21 | 0.040 | 0.04 | 0.25 | 123 | 0.040 | 0.0060 | 0.0013 | 0.003 | 0 0009 | 0.30 | | 007 | | | | | | |
| 22 | 0.046 | 0.05 | 0.24 | 12.6 | 0.039 | 0.0021 | 0.0030 | 0.004 | 0.0025 | | | 0.29 | | 0.009 | | | | |
| 23 | 0.030 | 0.12 | 0.33 | 12.4 | 0.040 | 0.0035 | 0 0012 | 0.003 | 0.0015 | | | | | | | | 0.0012 | |
| 24 | 0 045 | 0.30 | 0.30 | 133 | 0 019 | 0.0025 | 0 0008 | 0.003 | 00014 | | | 0 35 | 0020 | 0.041 | | | | |
| 25 | 0.045 | 0.30 | 0.30 | 13.3 | 0.019 | 0.0025 | 0.0008 | 0.003 | 0.0014 | | | 0.35 | 0.020 | 0.041 | | | | |
| 26 | 0 011 | 0.11 | 0.32 | 12.5 | 0.031 | 0.0032 | 0.0011 | 0.003 | 0.0012 | | | 0.09 | | | | | | |
| 101 | 0 008 | 0.08 | 0.40 | 10.0 | 0020 | 0.0045 | 00015 | 0.003 | 0 0010 | | | 0 08 | | | | | | |
| 102 | 0.076 | 0.08 | 0.40 | 14.8 | 0.014 | 0.0042 | 0.0024 | 0.003 | 0.0008 | | | 0.12 | | | | | | |
| 103 | 0 045 | 0.35 | 0.31 | 12.2 | 0.018 | 0.0030 | 0.0016 | 0.004 | 0.0009 | 0.03 | | 0.24 | 0.012 | 0.051 | 0.016 | 0.0018 | | 0 0019 |
| 104 | 0 046 | 0.10 | 0.04 | 137 | 0 016 | 0.0030 | 0 0018 | 0004 | 0.0007 | 0.49 | | 0.34 | | | | | | |
| 105 | 0.044 | 0.10 | 0.85 | 13.0 | 0.043 | 0.0043 | 0.0013 | 0.007 | 0.0035 | | | 0.35 | 0.007 | | | | | |
| 106 | 0.050 | 0.25 | 0.75 | 123 | 0.056 | 0 0028 | 0 0015 | 0.009 | 0.0027 | | 0.08 | 0.30 | | | | 0 0014 | | 0 0028 |
| 107 | 0.068 | 0.28 | 0.70 | 14 2 | 0027 | 0.0027 | 0.0016 | 0.005 | 0.0048 | | | 0.30 | 0 008 | 0025 | | | | |
| 108 | 0.042 | 0.15 | 0.15 | 13.8 | 0.064 | 0.0056 | 0.0008 | 0.007 | 0.0015 | | 0.36 | 0.19 | | | 0.010 | | 0.0020 | |
| 109 | 0.050 | 0.12 | 0.35 | 126 | 0.030 | 0.0030 | 0.0011 | 0.003 | 0.0015 | | | 0 10 | | | | | | |
| 110 | 0.050 | 0.12 | 0.35 | 126 | 0.030 | 0.0030 | 00011 | 0.003 | 0.0015 | | | 0.10 | | | | | | |
| 111 | 0.050 | 0.12 | 0.35 | 12.6 | 0.030 | 0.0030 | 0.0011 | 0.003 | 0.0015 | | | 0.10 | | | | | | |
| 112 | 0.050 | 0.12 | 0.35 | 126 | 0.030 | 0.0030 | 00011 | 0.003 | 0.0015 | | | 0.10 | | | | | | |
| 113 | 0.050 | 0.12 | 0.35 | 12.6 | 0.030 | 0.0030 | 0.0011 | 0.003 | 0.0015 | | | 0.10 | | | | | | |
| 114 | 0.050 | 0.12 | 0.35 | 12.6 | 0.030 | 0.0030 | 0.0011 | 0.003 | 0.0015 | | | 0.10 | | | | | | |
| 115 | 0.050 | 0.12 | 0.35 | 126 | 0.030 | 0.0030 | 00011 | 0.003 | 0.0015 | | | | | | | | | |

| | | | | | | | | | | | | | | | | | | |
|---|---|---|---|---|---|---|---|---|---|---|---|---|---|---|---|---|---|---|
| The blanks mean that the corresponding element is not intentionally added The underlines mean that the corresponding numerical value is outside the range of the present invention | | | | | | | | | | | | | | | | | | |

A sample for structure observation was collected from the steel sheet, and the circle equivalent diameter of prior austenite was measured on an observation section that was a thickness middle portion in an L-cross section. To measure the circle equivalent diameter of prior austenite, prior austenite grain boundaries were exposed by corroding the observation section with a saturated aqueous solution of picric acid, and the measurement was performed using a scanning electron microscope. The observation by the SEM was performed at a magnification of 1,000 times or 2,000 times, and SEM photographs of 5 or more visual fields were taken. An arithmetic average value of measured values obtained by image processing of the SEM photographs was set as the circle equivalent diameter of prior austenite. Regarding grain boundary lines of the prior austenite, the crystal orientations of the martensite and residual austenite were idenetifed in a range of 200 µm × 200 µm in each visual field by EBSD analysis, and the crystal orientations of the prior austenite were obtained in the above range. Lines where the crystal orientation difference of the prior austenite was 15° or more were defined as prior austenite grain boundaries. The area of the prior austenite present in the above range in each visual field was calculated using image analysis software, and from calculated areas S, an average value S_{A} of the prior austenite areas was calculated. Then, the average circle equivalent diameter of the prior austenite was represented by D, and from the expression D=2×√/(π×S_{A}), the average circle equivalent diameter D of the prior austenite was calculated.

The volume fraction of the residual austenite was measured by an X-ray diffraction method. The volume fraction of the residual austenite was obtained from the ratio between the integrated intensities of austenite (face-centered cubic structure) and tempered martensite (body-centered cubic structure) of X-ray peaks. Specifically, the volume fraction of the residual austenite was obtained from the ratio between the integrated intensities of the (111) plane, (200) plane, and (211) plane of ferrite (α phase) having a BCC structure and the integrated intensities of the (111) plane, (200) plane, and (220) plane of austenite (y phase) having an FCC structure.

A tensile test was performed in a room controlled to 20°C by an air conditioner according to JIS Z 2241: 2011, and the yield stress of the steel sheet was measured. As a test piece for the tensile test, a No. 1A full-thickness tensile test piece was set. The longitudinal direction of the test piece was a direction parallel to a rolling direction (L direction), and a sampling position for the test piece was set at a 1/4t portion. The average value of measured values obtained from two test pieces was defined as the yield stress. In a case where no clear measured yield stress was observed, the yield stress was assumed to be a 0.2% proof stress. The ultra-low temperature toughness was evaluated using a full-thickness compact tension (CT) test piece ground by 0.5 mm from each of front and rear surfaces. The cutting direction of a notch in the CT test piece was a direction (C direction) perpendicular to the rolling direction. In liquid hydrogen (-253°C), a J-R curve was created according to the unloading compliance method specified in ASTM standard E 1820-13, and a J value was converted into a K_{IC} value. The target value of the ultra-low temperature toughness was 150 MPa·√m or more.

The steel sheet was subjected to X-groove processing at a groove angle of 60°, and a Ni steel joint was manufactured by a coating arc welding method. The weld heat input was 20 kJ/cm or more and 30 kJ/cm or less. The chemical compositions of welding materials in Tables 2A and 2B were amounts of C, Si, Mn, Ni, Mo, W, Cr, Nb, and N measured using the samples collected from the welding materials. The amounts of chemical components of weld metals in Tables 2A and 2B were amounts of C, Si, Mn, Ni, P, S, N, Mo, W, Cr, and Nb measured using the samples collected from the weld metals of the Ni steel joints. The Vickers hardness of the base metal, the HAZ, and the weld metal of the Ni steel joint was measured according to JIS Z 2244: 2009 using a sample in which the macrostructure was exposed by a nital method according to JIS G 0553: 2019.

In addition, the proportion of a body-centered cubic structure in the weld metal after the completion of the welding was measured. It was measured from the surface of the welded joint at a center of the weld metal in the width direction as a measurement point. By using the ferrite structure amount measuring instrument (FERITSCOPE (registered trademark) FMP30) described above, the proportion of the BCC was measured with the use of a probe (FGAB 1.3-Fe) manufactured by FISCHER INSTRUMENTS K.K. as a probe of the measuring instrument.

In the observation of a cross section of the base metal portion along the abutting direction, the width of the weld metal of the macrostructure was minimum at the t/2 portion in the sheet thickness direction, so that the Vickers hardness measurement position in the sheet thickness direction was set at the t/4 portion. In addition, the measured load was 9.8 N (1 kg). The Vickers hardness of the weld metal was measured at intervals of 0.5 mm from the fusion line to the central portion of the weld metal in the width direction at the t/4 portion. The Vickers hardness of the base metal portion and the HAZ was measured at intervals of 0.5 mm from the fusion line at the t/4 portion until the fluctuation of the measured values was within the error range. As the Vickers hardness of the base metal portion, a measured value at a portion where the fluctuation of the measured values was within the error range was set. As the Vickers hardness of the HAZ, a maximum value of the Vickers hardness measured in the HAZ was set. In a case where the Vickers hardness of the HAZ was higher than the Vickers hardness of the weld metal and the base metal portion, an arithmetic average value of the Vickers hardness of the base metal portion and the Vickers hardness of the weld metal was obtained, and the value of the ratio of the Vickers hardness of the HAZ to the arithmetic average value was obtained.

The effective crystal grains of an embrittlement portion where the Vickers hardness of the HAZ was maximum were measured using an EBSD analyzer. The observation was performed for 5 or more visual fields at a magnification of 2,000 times, and the boundaries of the metallographic structure having an orientation difference of 15° or more were regarded as grain boundaries. Crystal grains surrounded by the grain boundaries were regarded as the effective crystal grains, and from the areas thereof, circle equivalent grain sizes (diameters) were obtained by image processing. As the effective grain size, an arithmetic average value of the circle equivalent diameters of the regions surrounded by the grain boundaries having an orientation difference of 15° or more was set.

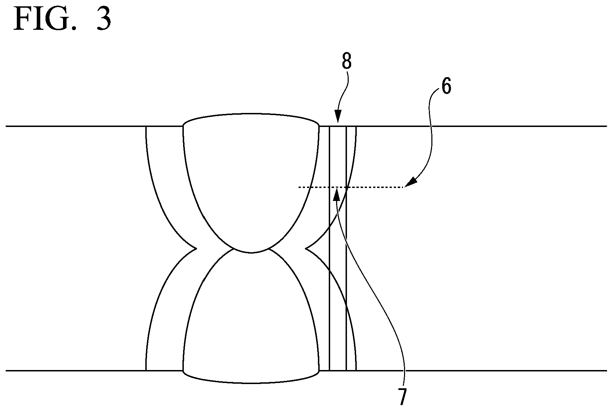

The ultra-low temperature toughness of the Ni steel joint was evaluated using a full-thickness CT test piece ground by 0.5 mm from each of front and rear surfaces. The depth direction of a notch of the CT test piece was a welding direction (C direction). As shown in FIG. 3, a notch 8 of the CT test piece extends along the sheet thickness direction, and a cutting direction of the notch 8 is perpendicular to the sheet-thickness surface. The notch 8 includes an embrittlement portion 7 where the Vickers hardness of the t/4 portion is maximized. In liquid hydrogen (-253°C), a J-R curve was created according to the unloading compliance method specified in ASTM standard E 1820-13, and a J value was converted into a Kic value. The target value of the ultra-low temperature toughness is 150 MPa·√m or more. The test results of the base metals and the Ni steel joints are shown in Tables 3A and 3B. In Tables 3A and 3B, "Prior γ Grain Size" indicates the average circle equivalent diameter of the prior austenite, "Yield Stress" indicates the yield stress at 20°C, and "Vickers Hardness Ratio" indicates the value of the ratio of the Vickers hardness of the welded heat-affected zone to the arithmetic average value of the Vickers hardness of the base metal portion and the Vickers hardness of the weld metal.

**[Table 2A]**

| No. | Chemical Composition of Welding Material (mass%) Remainder: Fe and Impurities | | | | | | | | | Chemical Composition of Weld Metal (mass%) Remainder: Fe and impurities | | |
|---|---|---|---|---|---|---|---|---|---|---|---|---|
| | C | Si | Mn | Ni | Mo | W | Cr | Nb | N | C | Si | Mn |
| 1 | 0.04 | 0.40 | 0.6 | 72.7 | 19.1 | 2.8 | | | 0.007 | 0.04 | 0.34 | 0.5 |
| 2 | 0.04 | 0.40 | 0.6 | 72.7 | 19.1 | 2.8 | | | 0.007 | 0.05 | 0.35 | 0.6 |
| 3 | 0.04 | 0.40 | 0.6 | 72.7 | 19.1 | 2.8 | | | 0.007 | 0.04 | 0.36 | 0.5 |
| 4 | 0.04 | 0.40 | 0.6 | 72.7 | 19.1 | 2.8 | | | 0.007 | 0.04 | 0.36 | 0.5 |
| 5 | 0.04 | 0.40 | 0.6 | 72.7 | 19.1 | 2.8 | | | 0.007 | 0.04 | 0.38 | 0.5 |
| 6 | 0.04 | 0.40 | 0.6 | 72.7 | 19.1 | 2.8 | | | 0.007 | 0.04 | 0.36 | 0.5 |
| 7 | 0.30 | 0.41 | 0.6 | 72.6 | 19.1 | 2.8 | | | 0.007 | 0.25 | 0.37 | 0.5 |
| 8 | 0.04 | 0.05 | 0.6 | 72.9 | 19.1 | 2.8 | | | 0.006 | 0.04 | 0.08 | 0.5 |
| 9 | 0.04 | 0.83 | 0.6 | 72.7 | 19.0 | 2.8 | | | 0.007 | 0.04 | 0.67 | 0.5 |
| 10 | 0.04 | 0.40 | 0.6 | 72.7 | 19.1 | 2.8 | | | 0.007 | 0.04 | 0.33 | 0.6 |
| 11 | 0.04 | 0.40 | 0.6 | 72.7 | 19.1 | 2.8 | | | 0.007 | 0.04 | 0.33 | 0.6 |
| 12 | 0.04 | 0.40 | 0.6 | 72.7 | 19.1 | 2.8 | | | 0.007 | 0.04 | 0.33 | 0.6 |
| 13 | 0.04 | 0.40 | 0.6 | 72.7 | 19.1 | 2.8 | | | 0.007 | 0.04 | 0.38 | 0.5 |
| 14 | 0.04 | 0.40 | 0.6 | 72.7 | 19.1 | 2.8 | | | 0.007 | 0.04 | 0.38 | 0.5 |
| 15 | 0.04 | 0.40 | 0.6 | 72.7 | 19.1 | 2.8 | | | 0.007 | 0.04 | 0.38 | 0.5 |
| 16 | 0.04 | 0.40 | 0.6 | 72.7 | 19.1 | 2.8 | | | 0.007 | 0.04 | 0.38 | 0.5 |
| 17 | 0.09 | 0.20 | 3.3 | 65.2 | 3.5 | | 15.7 | 1.5 | 0.007 | 0.09 | 0.17 | 2.7 |
| 18 | 0.09 | 0.20 | 3.3 | 65.2 | 3.5 | | 15.7 | 1.5 | 0.007 | 0.08 | 0.17 | 2.7 |
| 19 | 0.09 | 0.20 | 3.3 | 65.2 | 3.5 | | 15.7 | 1.5 | 0.007 | 0.08 | 0.21 | 2.8 |
| 20 | 0.09 | 0.20 | 3.3 | 65.2 | 3.5 | | 15.7 | 1.5 | 0.007 | 0.08 | 0.17 | 2.8 |
| 21 | 0.09 | 0.20 | 3.3 | 65.2 | 3.5 | | 15.7 | 1.5 | 0.007 | 0.08 | 0.17 | 2.7 |
| 22 | 0.09 | 0.20 | 3.3 | 65.2 | 3.5 | | 15.7 | 1.5 | 0.007 | 0.08 | 0.17 | 2.7 |
| 23 | 0.09 | 0.20 | 3.3 | 65.2 | 3.5 | | 15.7 | 2.4 | 0.007 | 0.08 | 0.18 | 2.7 |
| 24 | 0.15 | 0.06 | 12.3 | 13.0 | 3.0 | | 7.1 | | 0.044 | 0.14 | 0.12 | 11.1 |
| 25 | 0.15 | 0.07 | 12.6 | 13.2 | | | 9.6 | | 0.046 | 0.14 | 0.13 | 11.4 |
| 26 | 0.04 | 0.40 | 0.6 | 72.7 | 17.9 | 4.9 | | | 0.007 | 0.04 | 0.34 | 0.6 |
| 101 | 0.04 | 0.40 | 0.6 | 72.7 | 19.1 | 2.8 | | | 0.007 | 0.03 | 0.34 | 0.6 |
| 102 | 0.04 | 0.40 | 0.6 | 72.7 | 19.1 | 2.8 | | | 0.007 | 0.05 | 0.34 | 0.6 |
| 103 | 0.04 | 0.40 | 0.6 | 72.7 | 19.1 | 2.8 | | | 0.007 | 0.04 | 0.39 | 0.5 |
| 104 | 0.04 | 0.40 | 0.6 | 72.7 | 19.1 | 2.8 | | | 0.007 | 0.04 | 0.34 | 0.5 |
| 105 | 0.04 | 0.40 | 0.6 | 72.7 | 19.1 | 2.8 | | | 0.007 | 0.04 | 0.34 | 0.7 |
| 106 | 0.04 | 0.40 | 0.6 | 72.7 | 19.1 | 2.8 | | | 0.007 | 0.04 | 0.37 | 0.6 |
| 107 | 0.09 | 0.20 | 3.3 | 65.2 | 3.5 | | 15.7 | 1.5 | 0.007 | 0.09 | 0.22 | 2.8 |
| 108 | 0.09 | 0.20 | 3.3 | 65.2 | 3.5 | | 15.7 | 1.5 | 0.007 | 0.08 | 0.19 | 2.7 |
| 109 | 0.04 | 0.95 | 0.6 | 72.6 | 19.1 | 2.9 | | | 0.007 | 0.04 | 0.78 | 0.6 |
| 110 | 0.04 | 0.40 | 0.6 | 72.7 | 19.1 | 2.7 | | | 0.008 | 0.04 | 0.34 | 0.6 |
| 111 | 0.04 | 0.40 | 0.6 | 72.7 | 19.1 | 2.8 | | | 0.006 | 0.04 | 0.34 | 0.6 |
| 112 | 0.04 | 0.40 | 0.6 | 64.7 | 28.9 | 2.8 | | | 0.007 | 0.04 | 0.34 | 0.6 |
| 113 | 0.04 | 0.40 | 0.6 | 70.7 | 19.1 | 7.2 | | | 0.007 | 0.04 | 0.34 | 0.6 |
| 114 | 0.09 | 0.20 | 3.3 | 62.2 | 3.5 | | 22.3 | 1.5 | 0.006 | 0.08 | 0.18 | 2.7 |
| 115 | 0.09 | 0.20 | 3.3 | 63.2 | 3.5 | | 15.7 | 5.3 | 0.007 | 0.08 | 0.18 | 2.7 |

| | | | | | | | | | | | | |
|---|---|---|---|---|---|---|---|---|---|---|---|---|
| The blanks mean that the corresponding clement is not intentionally added. The underlines mean that the corresponding numerical value is outside the range of the present invention. | | | | | | | | | | | | |

**[Table 2B]**

| No. | Chemical Composition of Weld Metal (mass%) Remainder: Fe and Impurities | | | | | | | | | | |
|---|---|---|---|---|---|---|---|---|---|---|---|
| | Ni | P | S | N | O | Mo | W | Cr | Nb | Mo + W + Cr + Nb | BCC Fraction (%) |
| 1 | 60.7 | 0.003 | 0.0016 | 0.007 | 0.021 | 15.3 | 2.3 | | | 17.6 | 0.0 |
| 2 | 61.1 | 0.003 | 0.0014 | 0.007 | 0.022 | 15.3 | 2.2 | | | 17.5 | 0.0 |
| 3 | 60.2 | 0.003 | 0.0015 | 0.007 | 0.021 | 15.3 | 2.2 | | | 17.5 | 0.0 |
| 4 | 61.4 | 0.003 | 0.0015 | 0.007 | 0.021 | 15.3 | 2.2 | | | 17.5 | 0.0 |
| 5 | 60.8 | 0.003 | 0.0016 | 0.006 | 0.021 | 15.4 | 2.3 | | | 17.7 | 0.0 |
| 6 | 60.8 | 0.003 | 0.0015 | 0.007 | 0.021 | 15.4 | 2.2 | | | 17.6 | 0.0 |
| 7 | 60.7 | 0.003 | 0.0015 | 0.007 | 0.021 | 15.4 | 2.2 | | | 17.6 | 0.0 |
| 8 | 61.0 | 0.003 | 0.0015 | 0.006 | 0.021 | 15.4 | 2.2 | | | 17.6 | 0.0 |
| 9 | 60.8 | 0.003 | 0.0015 | 0.007 | 0.021 | 15.3 | 2.2 | | | 17.5 | 0.0 |
| 10 | 60.7 | 0.003 | 0.0014 | 0.007 | 0.022 | 15.3 | 2.3 | | | 17.6 | 0.0 |
| 11 | 60.8 | 0.003 | 0.0014 | 0.007 | 0.021 | 15.3 | 2.3 | | | 17.6 | 0.0 |
| 12 | 61.0 | 0.003 | 0.0015 | 0.007 | 0.023 | 15.4 | 2.3 | | | 17.7 | 0.0 |
| 13 | 60.8 | 0.003 | 0.0016 | 0.006 | 0.022 | 15.4 | 2.3 | | | 17.7 | 0.0 |
| 14 | 60.8 | 0.003 | 0.0016 | 0.006 | 0.022 | 15.4 | 2.3 | | | 17.7 | 0.0 |
| 15 | 60.8 | 0.003 | 0.0016 | 0.006 | 0.021 | 15.4 | 2.3 | | | 17.7 | 0.0 |
| 16 | 60.8 | 0.003 | 0.0016 | 0.006 | 0.021 | 15.4 | 2.3 | | | 17.7 | 0.0 |
| 17 | 55.0 | 0.003 | 0.0015 | 0.007 | 0.022 | 2.8 | | 12.4 | 1.2 | 16.4 | 0.0 |
| 18 | 54.7 | 0.003 | 0.0016 | 0.007 | 0.023 | 2.8 | | 12.6 | 1.3 | 16.7 | 0.0 |
| 19 | 54.8 | 0.003 | 0.0016 | 0.007 | 0.021 | 2.8 | | 12.5 | 1.2 | 16.5 | 0.0 |
| 20 | 54.7 | 0.003 | 0.0014 | 0.006 | 0.022 | 2.8 | | 12.6 | 1.2 | 16.6 | 0.0 |
| 21 | 54.6 | 0.003 | 0.0015 | 0.008 | 0.023 | 2.8 | | 12.5 | 1.1 | 16.4 | 0.0 |
| 22 | 54.7 | 0.003 | 0.0016 | 0.007 | 0.021 | 2.9 | | 12.5 | 1.1 | 16.5 | 0.0 |
| 23 | 54.6 | 0.003 | 0.0014 | 0.007 | 0.022 | 2.8 | | 12.5 | 1.9 | 17.2 | 0.0 |
| 24 | 13.1 | 0.003 | 0.0015 | 0.040 | 0.021 | 2.7 | | 6.3 | | 9.0 | 0.0 |
| 25 | 13.3 | 0.003 | 0.0015 | 0.042 | 0.023 | | | 8.6 | | 8.6 | 0.0 |
| 26 | 60.7 | 0.003 | 0.0014 | 0.007 | 0.021 | 14.1 | 4.2 | | | 18.3 | 0.0 |
| 101 | 60.2 | 0.003 | 0.0016 | 0.007 | 0.021 | 15.3 | 2.3 | | | 17.6 | 0.0 |
| 102 | 61.1 | 0.003 | 0.0016 | 0.007 | 0.022 | 15.3 | 2.2 | | | 17.5 | 0.0 |
| 103 | 60.6 | 0.003 | 0.0015 | 0.006 | 0.022 | 15.3 | 2.3 | | | 17.6 | 0.0 |
| 104 | 60.9 | 0.003 | 0.0014 | 0.007 | 0.023 | 15.3 | 2.2 | | | 17.5 | 0.0 |
| 105 | 60.8 | 0.003 | 0.0016 | 0.007 | 0.022 | 15.4 | 2.3 | | | 17.7 | 0.0 |
| 106 | 60.6 | 0.003 | 0.0014 | 0.006 | 0.021 | 15.3 | 2.3 | | | 17.6 | 0.0 |
| 107 | 55.0 | 0.003 | 0.0015 | 0.007 | 0.023 | 2.9 | | 12.4 | 1.2 | 16.5 | 0.0 |
| 108 | 54.9 | 0.003 | 0.0015 | 0.007 | 0.023 | 2.8 | | 12.6 | 1.2 | 16.6 | 0.0 |
| 109 | 60.6 | 0.003 | 0.0015 | 0.006 | 0.022 | 15.3 | 2.2 | | | 17.5 | 0.0 |
| 110 | 60.7 | 0.023 | 0.0016 | 0.007 | 0.021 | 15.3 | 2.2 | | | 17.5 | 0.0 |
| 111 | 60.7 | 0.003 | 0.0162 | 0.006 | 0.021 | 15.3 | 2.3 | | | 17.6 | 0.0 |
| 112 | 54.5 | 0.003 | 0.0014 | 0.007 | 0.022 | 23.3 | 2.3 | | | 25.6 | 0.0 |
| 113 | 59.1 | 0.003 | 0.0016 | 0.006 | 0.021 | 15.3 | 6.1 | | | 21.4 | 0.0 |
| 114 | 52.3 | 0.003 | 0.0014 | 0.007 | 0.023 | 2.8 | | 18.2 | 1.3 | 22.3 | 0.0 |
| 115 | 53.1 | 0.003 | 0.0016 | 0.007 | 0.021 | 2.8 | | 12.5 | 4.4 | 19.7 | 0.0 |

| | | | | | | | | | | | |
|---|---|---|---|---|---|---|---|---|---|---|---|
| The blanks mean that the corresponding element is not intentionally added. The underlines mean that the corresponding numerical value is outside the range of the present invention. | | | | | | | | | | | |

**[Table 3A]**

| No. | Base Metal | | | | Remarks |
|---|---|---|---|---|---|
| | Prior γ Grain Size (µm) | Yield Stress (MPa) | Vickers Hardness Hv1 (Hv) | Ultra-Low Temperature Toughness* (MPa·√m) | |
| 1 | 17.7 | 615 | 277 | 177 | |
| 2 | 15.3 | 617 | 258 | 165 | |
| 3 | 17.0 | 637 | 287 | 158 | |
| 4 | 15.8 | 656 | 295 | 188 | |
| 5 | 16.4 | 645 | 290 | 168 | |
| 6 | 16.8 | 650 | 293 | 178 | |
| 7 | 16.8 | 650 | 293 | 178 | |
| 8 | 16.8 | 650 | 293 | 178 | |
| 9 | 16.8 | 650 | 293 | 178 | |
| 10 | 16.9 | 636 | 286 | 174 | |
| 11 | 16.4 | 595 | 268 | 165 | |
| 12 | 16.8 | 638 | 287 | 167 | |
| 13 | 19.1 | 682 | 307 | 155 | Invention Example |
| 14 | 4.4 | 639 | 288 | 198 | |
| 15 | 11.6 | 621 | 279 | 183 | |
| 16 | 8.9 | 611 | 275 | 191 | |
| 17 | 14.9 | 661 | 297 | 171 | |
| 18 | 15.2 | 627 | 282 | 161 | |
| 19 | 16.9 | 647 | 291 | 170 | |
| 20 | 16.5 | 632 | 284 | 172 | |
| 21 | 16.4 | 568 | 256 | 173 | |
| 22 | 16.3 | 610 | 275 | 179 | |
| 23 | 16.4 | 576 | 259 | 206 | |
| 24 | 16.4 | 645 | 290 | 168 | |
| 25 | 16.4 | 645 | 290 | 168 | |
| 26 | 17.9 | 586 | 264 | 178 | |
| 101 | 19.6 | 571 | 257 | 145 | |
| 102 | 15.1 | 656 | 295 | 131 | |
| 103 | 16.4 | 559 | 252 | 128 | |
| 104 | 16.3 | 630 | 284 | 148 | |
| 105 | 16.2 | 650 | 293 | 138 | |
| 106 | 16.4 | 576 | 259 | 134 | |
| 107 | 15.7 | 616 | 277 | 129 | |
| 108 | 16.1 | 608 | 274 | 135 | Comparative Example |
| 109 | 16.5 | 634 | 297 | 169 | |
| 110 | 16.5 | 634 | 297 | 169 | |
| 111 | 16.5 | 634 | 297 | 169 | |
| 112 | 16.5 | 634 | 297 | 169 | |
| 113 | 16.5 | 634 | 297 | 169 | |
| 114 | 16.5 | 634 | 297 | 169 | |
| 115 | 16.5 | 634 | 297 | 169 | |

**[Table 3B]**

| No. | Ni Steel Joint | | | | | Remarks |
|---|---|---|---|---|---|---|
| | Vickers Hardness Hv2 of Weld Metal (Hv) | Vickers Hardness Hv3 of Welded Heat-Affected Zone (Hv) | Vickers Hardness Ratio Hv3/Hv2 | Effective Grain Size of Welded Heat-Affected Zone (µm) | Ultra-Low Temperature Toughness* (MPa·√m) | |
| 1 | 239 | 312 | 1.21 | 17.5 | 174 | |
| 2 | 204 | 410 | 1.77 | 14.3 | 164 | |
| 3 | 241 | 354 | 1.34 | 17.8 | 153 | |
| 4 | 216 | 348 | 1.36 | 11.5 | 183 | |
| 5 | 233 | 350 | 1.34 | 16.1 | 159 | |
| 6 | 235 | 348 | 1.32 | 16.2 | 176 | |
| 7 | 276 | 348 | 1.22 | 16.4 | 157 | |
| 8 | 227 | 348 | 1.34 | 16.5 | 172 | |
| 9 | 278 | 348 | 1.22 | 16.2 | 163 | |
| 10 | 240 | 350 | 1.33 | 16.1 | 173 | |
| 11 | 223 | 360 | 1.47 | 16.3 | 164 | |
| 12 | 235 | 364 | 1.39 | 16.1 | 164 | |
| 13 | 235 | 390 | 1.44 | 17.2 | 152 | Invention Example |
| 14 | 238 | 350 | 1.33 | 4.2 | 195 | |
| 15 | 236 | 372 | 1.44 | 10.9 | 177 | |
| 16 | 234 | 312 | 1.23 | 8.6 | 185 | |
| 17 | 238 | 394 | 1.47 | 14.7 | 164 | |
| 18 | 233 | 380 | 1.48 | 16.1 | 157 | |
| 19 | 236 | 348 | 1.32 | 15.9 | 167 | |
| 20 | 235 | 330 | 1.27 | 16.9 | 164 | |
| 21 | 237 | 340 | 1.38 | 16.1 | 164 | |
| 22 | 234 | 352 | 1.38 | 16.4 | 178 | |
| 23 | 260 | 320 | 1.23 | 16.0 | 193 | |
| 24 | 228 | 350 | 1.35 | 16.2 | 154 | |
| 25 | 240 | 350 | 1.32 | 16.4 | 153 | |
| 26 | 269 | 282 | 1.06 | 17.4 | 151 | |
| 101 | 236 | 276 | 1.12 | 17.9 | 134 | |
| 102 | 235 | 412 | 1.55 | 13.8 | 123 | |
| 103 | 237 | 350 | 1.43 | 16.1 | 127 | |
| 104 | 234 | 352 | 1.36 | 16.3 | 143 | |
| 105 | 233 | 348 | 1.32 | 16.5 | 127 | |
| 106 | 235 | 360 | 1.46 | 16.1 | 127 | |
| 107 | 236 | 396 | 1.54 | 15.0 | 129 | Comparative Example |
| 108 | 235 | 344 | 1.35 | 16.1 | 136 | |
| 109 | 289 | 347 | 1.18 | 16.2 | 131 | |
| 110 | 236 | 345 | 1.29 | 16.3 | 140 | |
| 111 | 233 | 346 | 1.31 | 16.1 | 136 | |
| 112 | 291 | 350 | 1.19 | 16.0 | 141 | |
| 113 | 285 | 342 | 1.18 | 16.2 | 141 | |
| 114 | 292 | 345 | 1.17 | 16.1 | 134 | |
| 115 | 287 | 344 | 1.18 | 16.0 | 141 | |

In any of the examples, the proportion of the residual austenite in the base metal was 2.0 vol% or more and 20.0 vol% or less. In addition, as shown in Tables 3A and 3B, the base metals and the Ni steel joints of Nos. 1 to 26 had ultra-low temperature toughness of 150 MPa·√m or more. In No. 23, since the C content of the base metal portion was low and the yield stress was low, the base metal portion was preferentially deformed, so that the ultra-low temperature toughness of the Ni steel joint was also better than in other Ni steel joints. In Nos. 1 to 25, the hardness of the embrittlement portion is 1.2 times or more the average value of the hardness of the base metal portion and the hardness of the weld metal, and the ultra-low temperature toughness is better than in the Ni steel joint of No. 26. In the Ni steel joint of No. 26, since the C content of the base metal portion was low and the Vickers hardness of the embrittlement portion was low, the hardness of the embrittlement portion relative to the average value of the hardness of the base metal portion and the hardness of the weld metal is lower than in the Ni steel joints of Nos. 1 to 25. Meanwhile, Nos. 101 to 108 are examples in which the base metal portion does not have an appropriate chemical composition and the ultra-low temperature toughness of the Ni steel joint decreases. Nos. 109 to 115 were examples in which the weld metal did not have an appropriate chemical composition and the ultra-low temperature toughness of the Ni steel joint decreased.

### [Industrial Applicability]

A nickel-containing steel welded joint for low temperature use according to the present invention is used for, for example, a liquid hydrogen tank. The nickel-containing steel welded joint for low temperature use according to the present invention has a high yield stress at room temperature and enables an increase in size and a reduction in weight of a liquid hydrogen tank. By increasing the size of the liquid hydrogen tank, the surface area relative to the volume decreases, which can be expected to improve the heat insulation performance. By reducing the weight of the liquid hydrogen tank, it is possible to expect the improvement in fuel efficiency of a liquid hydrogen carrier.

### [Brief Description of the Reference Symbols]

1: Base metal portion
2: Welded heat-affected zone
3: Weld metal
4: Fusion line
5: Position of root surface of groove in sheet thickness direction
6: Vickers hardness measurement position
7: Embrittlement portion
8: Notch

## Claims

1. A nickel-containing steel welded joint for low temperature use, comprising: a base metal portion; a welded heat-affected zone; and a weld metal,
wherein the base metal portion includes, as a chemical composition, by mass%,
C: 0.010% or more and 0.070% or less,
Si: 0.03% or more and 0.30% or less,
Mn: 0.10% or more and 0.80% or less,
Ni: 10.5% or more and 17.4% or less,
Al: 0.010% or more and 0.060% or less,
N: 0.0015% or more and 0.0060% or less,
O: 0.0030% or less,
P: 0.0080% or less,
S: 0.0040% or less,
Cu: 0% or more and 1.00% or less,
Cr: 0% or more and 1.00% or less,
Mo: 0% or more and 0.60% or less,
Nb: 0% or more and 0.050% or less,
V: 0% or more and 0.080% or less,
Ti: 0% or more and 0.020% or less,
B: 0% or more and 0.0020% or less,
Ca: 0% or more and 0.0040% or less,
REM: 0% or more and 0.0050% or less, and
a remainder: Fe and impurities,
an average circle equivalent diameter of prior austenite of the base metal portion is 3.0 µm or more and 20.0 µm or less,
a yield stress of the base metal portion at 20°C is 460 MPa or more and 710 MPa or less,
the weld metal includes, as a chemical composition, by mass%,
C: 0.01% or more and 0.30% or less,
Si: 0.03% or more and 0.75% or less,
Mn: 0.1% or more and 17.0% or less,
Ni: 8.0% or more and 85.0% or less,
P: 0.020% or less,
S: 0.015% or less,
N: 0.100% or less,
2.0% or more of a total of one or more of
Mo: 0% or more and 22.0% or less,
W: 0% or more and 5.0% or less,
Cr: 0% or more and 17.0% or less, and
Nb: 0% or more and 3.0% or less,
O: 0% or more and 0.1% or less, and
a remainder: Fe and impurities, and
a proportion of a structure having a body-centered cubic structure in a structure of the weld metal is 10% or less.

2. The nickel-containing steel welded joint for low temperature use according to claim 1,
wherein the weld metal includes, as a chemical composition, by mass%,
C: 0.01% or more and 0.15% or less,
Si: 0.03% or more and 0.75% or less,
Mn: 0.1% or more and 4.0% or less,
Ni: 40.0% or more and 85.0% or less,
Mo: 9.0% or more and 22.0% or less,
W: 0.9% or more and 5.0% or less,
Cr: 0% or more and 4.0% or less,
Nb: 0% or more and 3.0% or less,
P: 0.020% or less,
S: 0.015% or less,
N: 0.010% or less,
O: 0% or more and 0.1% or less, and
a remainder: Fe and impurities.

3. The nickel-containing steel welded joint for low temperature use according to claim 1,
wherein the weld metal includes, as a chemical composition, by mass%,
C: 0.01% or more and 0.15% or less,
Si: 0.03% or more and 0.75% or less,
Mn: 0.1% or more and 4.0% or less,
Ni: 40.0% or more and 85.0% or less,
Cr: 6.0% or more and 17.0% or less,
Mo: 0% or more and 9.0% or less,
W: 0% or more and 5.0% or less,
Nb: 0.2% or more and 3.0% or less,
P: 0.020% or less,
S: 0.015% or less,
N: 0.010% or less,
O: 0% or more and 0.1% or less, and
a remainder: Fe and impurities.

4. The nickel-containing steel welded joint for low temperature use according to claim 1,
wherein the weld metal includes, as a chemical composition, by mass%,
C: 0.01% or more and 0.30% or less,
Si: 0.03% or more and 0.75% or less,
Mn: 7.0% or more and 17.0% or less,
Ni: 8.0% or more and 18.0% or less,
Cr: 2.0% or more and 12.0% or less,
Nb: 0% or more and 3.0% or less,
Mo: 0% or more and 5.0% or less,
W: 0% or more and 5.0% or less,
P: 0.020% or less,
S: 0.015% or less,
N: 0.10% or less,
O: 0% or more and 0.1% or less, and
a remainder: Fe and impurities.

5. The nickel-containing steel welded joint for low temperature use according to any one of claims 1 to 4,
wherein a maximum value of Vickers hardness of the welded heat-affected zone is 1.20 times or more and 3.00 times or less an arithmetic average value of Vickers hardness of the base metal portion and Vickers hardness of the weld metal, and
an effective grain size of a portion where the Vickers hardness of the welded heat-affected zone is maximized is 2.0 µm or more and 18.0 µm or less.
